# EUROPEAN PATENT APPLICATION

(11) **EP 3 689 695 A1**
(43) Date of publication of application: **05.08.2020**
(21) Application number: 18877498.8
(22) Date of filing: 16.11.2018
(51) Int. Cl.: B60W 30/06, G01C 21/28, G08G 1/09, G08G 1/14

(54) **VEHICLE POSITION ESTIMATION DEVICE AND VEHICLE CONTROL DEVICE**

(30) Priority: 17.11.2017 JP 2017221899
(71) Applicant: AISIN AW CO., LTD., Anjo-shi, Aichi-ken, 444-1192 (JP)
(72) Inventor: HIYOKAWA, Toyoji, Anjo-shi Aichi 444-1192 (JP); OGAWA, Keita, Anjo-shi Aichi 444-1192 (JP); IMAMURA, Yoshiaki, Anjo-shi Aichi 444-1192 (JP); TANAKA, Yu, Kariya-shi Aichi 448-8650 (JP); KUNO, Koji, Kariya-shi Aichi 448-8650 (JP)
(74) Representative: Cabinet Beau de Loménie
(86) International application number: PCT/JP2018/042586
(87) International publication number: WO 2019/098353

(57) **Abstract**

A vehicle position estimation device according to an example of an embodiment includes a parking lot data acquisition unit that acquires parking lot data capable of identifying an absolute orientation and an absolute position of a road surface marking provided on a road surface of a parking lot, an image data acquisition unit that acquires image data obtained by an on-board camera that captures a situation around a vehicle, and a position estimation unit that calculates a relative orientation and a relative position of the road surface marking with respect to the vehicle on the image data by detecting road surface marking data related to the road surface marking from the image data, and that estimates an actual orientation and an actual position of the vehicle on the basis of the calculated relative orientation, the calculated relative position, and the parking lot data.

## Description

### TECHNICAL FIELD

An embodiment of the present invention relates to a vehicle position estimation device and a vehicle control device.

### BACKGROUND ART

Technologies for achieving automated valet parking including automated parking and automated retrieval are now studied. In the automated parking, after an occupant gets out of a vehicle in a predetermined drop-off area within a parking lot, the vehicle autonomously moves from the drop-off area to an available parking space and parks itself there in response to a predetermined instruction. In the automated retrieval, after the automated parking is completed, the vehicle autonomously moves out of the parking space to a predetermined pick-up area and stops itself there in response to a predetermined call.

### Related Art Documents

Patent Documents

Patent Document 1: Japanese Unexamined Patent Application Publication No. 2015-41348 (JP 2015-41348 A)

### SUMMARY OF THE INVENTION

### Problem to be Solved by the Invention

In technologies based on autonomous travel, such as the automated valet parking described above, it is important to accurately find the current position of a vehicle during the autonomous travel. In this regard, one conventional method (what is called odometry) estimates the current position of a vehicle using a value detected by a wheel speed sensor or the like. However, this method may not always accurately find the current position of a vehicle because an error in estimation result increases cumulatively with an increase in distance traveled by the vehicle.

Therefore, a purpose of an embodiment is to provide a vehicle position estimation device and a vehicle control device that are capable of accurately finding the current position of a vehicle.

### Means for Solving the Problem

A vehicle position estimation device according to an example of an embodiment includes the following: a parking lot data acquisition unit that acquires parking lot data capable of identifying an absolute orientation and an absolute position of a road surface marking provided on a road surface of a parking lot, an image data acquisition unit that acquires image data obtained by an on-board camera that captures a situation around a vehicle, and a position estimation unit that calculates a relative orientation and a relative position of the road surface marking with respect to the vehicle on the image data by detecting road surface marking data related to the road surface marking from the image data, and that estimates an actual orientation and an actual position of the vehicle on the basis of the calculated relative orientation, the calculated relative position, and the parking lot data.

The vehicle position estimation device described above is capable of accurately finding the current position (the actual position) and the current orientation (the actual orientation) of the vehicle by taking into account deviations of the theoretical position and the theoretical orientation of the road surface marking that are identified using the relative position and the relative orientation calculated on the basis of the image data from the (normal) absolute position and the (normal) absolute orientation of the road surface marking that are identified on the basis of the parking lot data.

In the vehicle position estimation device according to the example described above, the position estimation unit calculates the relative orientation and the relative position of the road surface marking that is located on either a left side or a right side of the vehicle by detecting the road surface marking data from side image data that is the image data representative of the situation on either the left side or the right side of the vehicle. This structure is capable of easily calculating the relative orientation and the relative position of the road surface marking by using the side image data that tends to capture the road surface marking.

Further, in the vehicle position estimation device according to the example described above, the parking lot data acquisition unit acquires, as the parking lot data, boundary line data capable of identifying the absolute orientation and the absolute position of a boundary line that is the road surface marking indicative of a boundary of a parking space pre-provided in the parking lot, and the position estimation unit calculates the relative orientation and the relative position of the boundary line by detecting, as the road surface marking data, a position of an end portion of the boundary line and an orientation of the boundary line on the image data, and estimates the actual orientation and the actual position of the vehicle on the basis of the calculated relative orientation, the calculated relative position, and the boundary line data. This structure is capable of easily estimating the actual orientation and the actual position of the vehicle by using the boundary line that is commonly provided as the road surface marking indicative of the boundary of the parking space.

In the above structure using the boundary line, of the boundary line on the image data, the position estimation unit detects, as the road surface marking data, the position of the end portion that is located on an opening portion side of the parking space that is delineated by the boundary line in such a manner as to have an opening portion, and a direction of extension of the boundary line including the end portion. This structure is capable of easily estimating the actual orientation and the actual position of the vehicle by using the position of the end portion of the boundary line that is located on the opening portion side of the parking space and the direction of extension of the boundary line including the end portion.

In the above structure using the boundary line, of the boundary line on the image data, the position estimation unit detects, as the road surface marking data, a position of a central point of the end portion and a direction of extension of the boundary line including the end portion. This structure is capable of easily estimating the actual orientation and the actual position of the vehicle by using the position of the central point of the end portion of the boundary line and the direction of extension of the boundary line including the end portion.

Further, in the vehicle position estimation device according to the example described above, the parking lot data acquisition unit acquires, as the parking lot data, first marker data capable of identifying the absolute orientation and the absolute position of a first marker that includes a first line segment and that is the road surface marking pre-provided around a route along which the vehicle travels in the parking lot, and the position estimation unit calculates the relative orientation and the relative position of the first marker with respect to the vehicle by detecting, as the road surface marking data, a position of the first marker and an orientation of the first line segment included in the first marker on the image data, and estimates the actual orientation and the actual position of the vehicle on the basis of the calculated relative orientation, the calculated relative position, and the first marker data. This structure is capable of easily estimating the actual orientation and the actual position of the vehicle by using the first marker.

Further, in the vehicle position estimation device according to the example described above, the parking lot data acquisition unit acquires, as the parking lot data, at least one of boundary line data and second marker data. The boundary line data is capable of identifying the absolute orientation and the absolute position of a boundary line that is the road surface marking indicative of a boundary of a parking space pre-provided in the parking lot. The second marker data is capable of identifying the absolute orientation and the absolute position of a second marker. The second marker includes a second line segment and is the road surface marking that is provided in an area around the boundary line and on the inside of a route along which the vehicle makes a turn in the parking lot. In this structure, when the vehicle makes the turn, the position estimation unit calculates the relative orientation and the relative position of at least one of the boundary line and the second marker that are located on the inside of the turn of the vehicle by detecting, as the road surface marking data, data related to the at least one of the boundary line and the second marker from inside image data that is the image data representative of the situation on the inside of the turn of the vehicle, and estimates the actual orientation and the actual position of the vehicle on the basis of the calculated relative orientation, the calculated relative position, and the at least one of the boundary line data and the second marker data corresponding to the detected road surface marking data. This structure is capable of accurately estimating the actual orientation and position of the vehicle during the turn by using at least one of the boundary line and the second marker.

Further, in the vehicle position estimation device according to the example described above, the position estimation unit detects, as the road surface marking data, a first value indicative of an orientation and a position of the road surface marking in a first coordinate system on the image data, converts the first value into a second value in a second coordinate system associated with the on-board camera, and converts the second value into a third value in a third coordinate system associated with the vehicle so as to calculate the third value as the relative orientation and the relative position of the road surface marking with respect to the vehicle. This structure is capable of easily calculating the relative orientation and the relative position of the road surface marking with respect to the vehicle by coordinate transformation.

Further, in the vehicle position estimation device according to the example described above, the position estimation unit calculates the theoretical absolute orientation and the theoretical absolute position of the road surface marking on the basis of estimation values of the actual orientation and the actual position of the vehicle and on the basis of the relative orientation and the relative position of the road surface marking. The estimation values are based on previous estimation results of the actual orientation and the actual position of the vehicle and based on the amounts of change in the actual orientation and the actual position of the vehicle that are based on odometry. Then, the position estimation unit extracts, from the parking lot data, partial data corresponding to an area around the theoretical absolute position, corrects the estimation values of the actual orientation and the actual position of the vehicle on the basis of differences of the theoretical absolute position from the absolute orientation and the absolute position that are based on the partial data, and estimates the actual orientation and the actual position of the vehicle on the basis of the corrected values. This structure is capable of easily estimating the actual orientation and position of the vehicle by using the partial data, not using all the parking lot data.

In this case, after correcting the estimation value of the actual orientation such that the theoretical absolute orientation coincides with the absolute orientation that is based on the partial data, the position estimation unit corrects the estimation value of the actual position such that the theoretical absolute position coincides with the absolute position that is based on the partial data. This structure is capable of easily correcting the estimation values of the actual orientation and the actual position of the vehicle in a stepwise manner.

A vehicle position estimation device according to another example of the embodiment includes the following: a parking lot data acquisition unit that acquires parking lot data including information on an absolute position of each of multiple road surface markings that are provided on a road surface of a parking lot; an image data acquisition unit that acquires image data on an image captured by an on-board camera that captures a situation around a vehicle; and a position estimation unit that calculates relative positions of at least two of the multiple road surface markings with respect to the vehicle on the image data by detecting road surface marking data related to the at least two road surface markings from the image data, and that estimates an actual position of the vehicle on the basis of the calculated relative positions and the parking lot data.

The vehicle position estimation device described above is capable of accurately finding the current position (the actual position) of the vehicle by taking into account deviations of the theoretical positions of the at least two road surface markings (and the positional relationship therebetween) that are identified using the relative positions calculated on the basis of the image data from the (normal) absolute positions of the at least two road surface markings (and the positional relationship therebetween) that are identified on the basis of the parking lot data.

In the vehicle position estimation device according to the other example, the multiple road surface markings include at least one first road surface marking located on the left side of the vehicle and at least one second road surface marking located on the right side of the vehicle, and the position estimation unit calculates the relative positions of the first road surface marking and the second road surface marking by detecting, as the road surface marking data, a first position of the first road surface marking from left side image data that is the image data representative of the situation on the left side of the vehicle and by detecting, as the road surface marking data, a second position of the second road surface marking from right side image data that is the image data representative of the situation on the right side of the vehicle. This structure is capable of accurately calculating the relative positions of at least two road surface markings by using two images of different types (the left side image data and the right side image data).

Further, in the vehicle position estimation device according to the other example, the position estimation unit calculates the relative positions of at least two road surface markings that are located on either the left side or the right side of the vehicle by detecting, as the road surface marking data, a position of each of the at least two road surface markings from side image data that is the image data representative of the situation on either the left side or the right side of the vehicle. This structure is capable of easily calculating the relative positions of at least two road surface markings by using an image of one type (the side image data) only.

Further, in the vehicle position estimation device according to the other example, the parking lot data acquisition unit acquires, as the parking lot data, boundary line data capable of identifying the absolute positions of end portions of multiple boundary lines that are the road surface markings indicative of a boundary of a parking space pre-provided in the parking lot, and the position estimation unit calculates the relative positions of at least two of the multiple boundary lines by detecting, as the road surface marking data, positions of the end portions of the at least two boundary lines on the image data, and estimates the actual position of the vehicle on the basis of the calculated relative positions and the boundary line data. This structure is capable of easily estimating the actual position of the vehicle by using at least two of the multiple boundary lines that are commonly provided as the road surface markings indicative of the boundary of the parking space.

In the above structure using at least two boundary lines, of the at least two boundary lines on the image data, the position estimation unit detects, as the road surface marking data, the positions of the end portions that are located on an opening portion side of the parking space that is delineated by the boundary lines in such a manner as to have an opening portion. This structure is capable of easily estimating the actual position of the vehicle by using the positions of the end portions of the at least two boundary lines that are located on the opening portion side of the parking space.

Further, in the above structure using at least two boundary lines, the position estimation unit detects, as the road surface marking data, positions of central points of the end portions of the at least two boundary lines on the image data. This structure is capable of easily estimating the actual position of the vehicle by using the positions of the central points of the end portions of the at least two boundary lines.

Further, in the vehicle position estimation device according to the other example, the parking lot data acquisition unit acquires, as the parking lot data, boundary line data and marker data. The boundary line data is capable of identifying the absolute positions of end portions of multiple boundary lines that are the road surface markings indicative of a boundary of a parking space pre-provided in the parking lot. The marker data is capable of identifying the absolute positions of multiple markers that are pre-provided around a route along which the vehicle travels in the parking lot, and the position estimation unit estimates the actual position of the vehicle by detecting the road surface marking data that is related to at least two of the multiple boundary lines, at least two of the multiple markers, or both at least one of the multiple boundary lines and at least one of the multiple markers. This structure is capable of easily estimating the actual position of the vehicle on the basis of a combination of any two or more of the multiple boundary lines and the multiple markers.

Further, in the vehicle position estimation device according to the other example, the position estimation unit detects, as the road surface marking data, first values indicative of positions of the at least two road surface markings in a first coordinate system on the image data, converts the first values into second values in a second coordinate system that is associated with the on-board camera, and converts the second values into third values in a third coordinate system that is associated with the vehicle so as to calculate the third values as the relative positions of the at least two road surface markings with respect to the vehicle. This structure is capable of easily calculating the relative positions of at least two road surface markings with respect to the vehicle by coordinate transformation.

Further, in the vehicle position estimation device according to the other example, the position estimation unit calculates theoretical absolute positions of the at least two road surface markings on the basis of an estimation value of the actual position of the vehicle and on the basis of the relative positions of the at least two road surface markings. The estimation value is based on a previous estimation result of the actual position of the vehicle and based on the amount of change in the actual position of the vehicle that is based on odometry. Then, the position estimation unit extracts, from the parking lot data, partial data corresponding to an area around the theoretical absolute positions, corrects the estimation value of the actual position of the vehicle on the basis of differences of the theoretical absolute positions from the absolute positions, and estimates the actual position of the vehicle on the basis of the corrected value. This structure is capable of easily estimating the actual position of the vehicle by using the partial data, not using all the parking lot data.

A vehicle control device according to further another example of the embodiment is configured to be mounted on a vehicle and including the following: a travel control unit that controls a traveling state of the vehicle to achieve autonomous travel in a parking lot; a parking lot data acquisition unit that acquires parking lot data capable of identifying an absolute orientation and an absolute position of a road surface marking provided on a road surface of the parking lot; an image data acquisition unit that acquires image data obtained by an on-board camera that captures a situation around the vehicle; and a position estimation unit that calculates a relative orientation and a relative position of the road surface marking with respect to the vehicle on the image data during the autonomous travel by detecting road surface marking data related to the road surface marking from the image data, and that estimates an actual orientation and an actual position of the vehicle on the basis of the calculated relative orientation, the calculated relative position, and the parking lot data.

The vehicle control device described above is capable of accurately finding the current position (the actual position) and the current orientation (the actual orientation) of the vehicle during the autonomous travel by taking into account deviations of the theoretical position and the theoretical orientation of the road surface marking that are identified using the relative position and the relative orientation calculated on the basis of the image data from the (normal) absolute position and the (normal) absolute orientation of the road surface marking that are identified on the basis of the parking lot data.

A vehicle control device according to still further another example of the embodiment is configured to be mounted on a vehicle and including the following: a travel control unit that controls a traveling state of the vehicle to achieve autonomous travel in a parking lot; a parking lot data acquisition unit that acquires parking lot data including information on an absolute position of each of multiple road surface markings that are provided on a road surface of the parking lot; an image data acquisition unit that acquires image data on an image captured by an on-board camera that captures a situation around a vehicle; and a position estimation unit that calculates relative positions of at least two of the multiple road surface markings with respect to the vehicle on the image data during the autonomous travel by detecting road surface marking data related to the at least two road surface markings from the image data, and that estimates an actual position of the vehicle including an actual orientation thereof on the basis of the calculated relative positions and the parking lot data.

The vehicle control device described above is capable of accurately finding the current position (the actual position) of the vehicle during the autonomous travel by taking into account deviations of the theoretical positions of the at least two road surface markings (and the positional relationship therebetween) that are identified using the relative positions calculated on the basis of the image data from the (normal) absolute positions of the at least two road surface markings (and the positional relationship therebetween) that are identified on the basis of the parking lot data.

### BRIEF DESCRIPTION OF THE DRAWINGS

[FIG. 1] FIG. 1 is an illustrative and schematic diagram illustrating an example of automated parking in an automated valet parking system according to an embodiment.
[FIG. 2] FIG. 2 is an illustrative and schematic diagram illustrating an example of automated retrieval in the automated valet parking system according to the embodiment.
[FIG. 3] FIG. 3 is an illustrative and schematic diagram illustrating the hardware structure of a management device according to the embodiment.
[FIG. 4] FIG. 4 is an illustrative and schematic block diagram illustrating the system structure of a vehicle control system according to the embodiment.
[FIG. 5] FIG. 5 is an illustrative and schematic block diagram illustrating functions of the management device and a vehicle control device according to the embodiment.
[FIG. 6] FIG. 6 is an illustrative and schematic diagram illustrating an example of a current position estimation method that may be performed by a position estimation unit of the vehicle control device according to the embodiment.
[FIG. 7] FIG. 7 is an illustrative and schematic diagram explaining an example of a current position estimation method that is different from that illustrated in FIG. 6 and that may be performed by the position estimation unit of the vehicle control device according to the embodiment.
[FIG. 8] FIG. 8 is an illustrative and schematic diagram explaining an example of a current position estimation method that is different from those illustrated in FIG. 6 and FIG. 7 and that may be performed by the position estimation unit of the vehicle control device according to the embodiment.
[FIG. 9] FIG. 9 is an illustrative and schematic diagram explaining an example of a current position estimation method that is different from those illustrated in FIGS. 6 to 8 and that may be performed by the position estimation unit of the vehicle control device according to the embodiment.
[FIG. 10] FIG. 10 is an illustrative and schematic diagram explaining an example of a current position estimation method that is different from those illustrated in FIGS. 6 to 9 and that may be performed by the position estimation unit of the vehicle control device according to the embodiment.
[FIG. 11] FIG. 11 is an illustrative and schematic diagram explaining details of correction that may be performed by the position estimation unit of the vehicle control device according to the embodiment and that takes into account both the relative position and relative orientation of one road surface marking.
[FIG. 12] FIG. 12 is an illustrative and schematic diagram following FIG. 11 and explaining details of correction that may be performed by the position estimation unit of the vehicle control device according to the embodiment and that takes into account both the relative position and relative orientation of one road surface marking.
[FIG. 13] FIG. 13 is an illustrative and schematic diagram explaining details of correction that may be performed by the position estimation unit of the vehicle control device according to the embodiment and that takes into account the relative positions only of multiple road surface markings.
[FIG. 14] FIG. 14 is an illustrative and schematic diagram following FIG. 13 and explaining details of correction that may be performed by the position estimation unit of the vehicle control device according to the embodiment and that takes into account the relative positions only of multiple road surface markings.
[FIG. 15] FIG. 15 is an illustrative and schematic sequence diagram illustrating the flow of processes that are executed by the management device and the vehicle control device when automated parking is performed in the embodiment.
[FIG. 16] FIG. 16 is an illustrative and schematic sequence diagram illustrating the flow of processes that are executed by the management device and the vehicle control device when automated retrieval is performed in the embodiment.
[FIG. 17] FIG. 17 is an illustrative and schematic flowchart illustrating the flow of a current position estimation process included in traveling control that is performed by the vehicle control device when the automated parking and the automated retrieval are performed in the embodiment.
[FIG. 18] FIG. 18 is an illustrative and schematic flowchart illustrating the flow of a road surface marking data detection process that is performed by the vehicle control device when the traveling control is performed in the embodiment.
[FIG. 19] FIG. 19 is an illustrative and schematic flowchart illustrating the flow of the current position estimation process that is executed by the vehicle control device when the traveling control is performed in the embodiment.
[FIG. 20] FIG. 20 is an illustrative and schematic diagram explaining details of identification of the relative position and relative orientation of the road surface marking that may be performed by the position estimation unit of the vehicle control device according to the embodiment.
[FIG. 21] FIG. 21 is an illustrative and schematic diagram following FIG. 20 and explaining details of identification of the relative position and relative orientation of the road surface marking that may be performed by the position estimation unit of the vehicle control device according to the embodiment.
[FIG. 22] FIG. 22 is an illustrative and schematic diagram explaining details of correction of the actual orientation of the vehicle that may be performed by the position estimation unit of the vehicle control device according to the embodiment.
[FIG. 23] FIG. 23 is an illustrative and schematic diagram following FIG. 22 and explaining details of correction of the actual orientation of the vehicle that may be performed by the position estimation unit of the vehicle control device according to the embodiment.
[FIG. 24] FIG. 24 is an illustrative and schematic diagram explaining details of correction of the actual position of the vehicle that may be performed by the position estimation unit of the vehicle control device according to the embodiment.

### MODES FOR CARRYING OUT THE INVENTION

An embodiment is described below with reference to the drawings. The structures of the embodiment described below, and effects and results (advantages) brought by the structures are merely by way of example and are not limited to those described below.

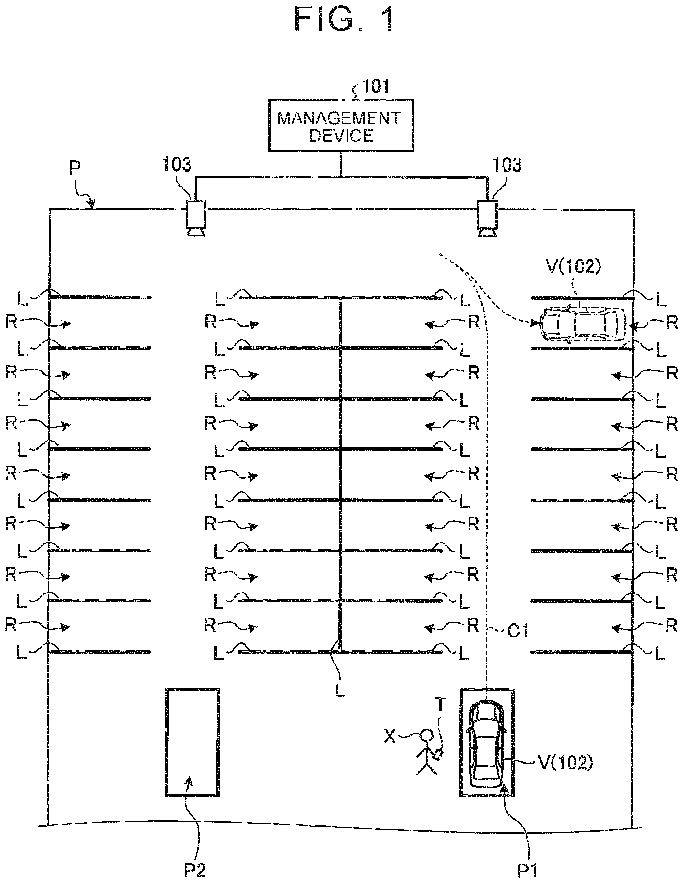

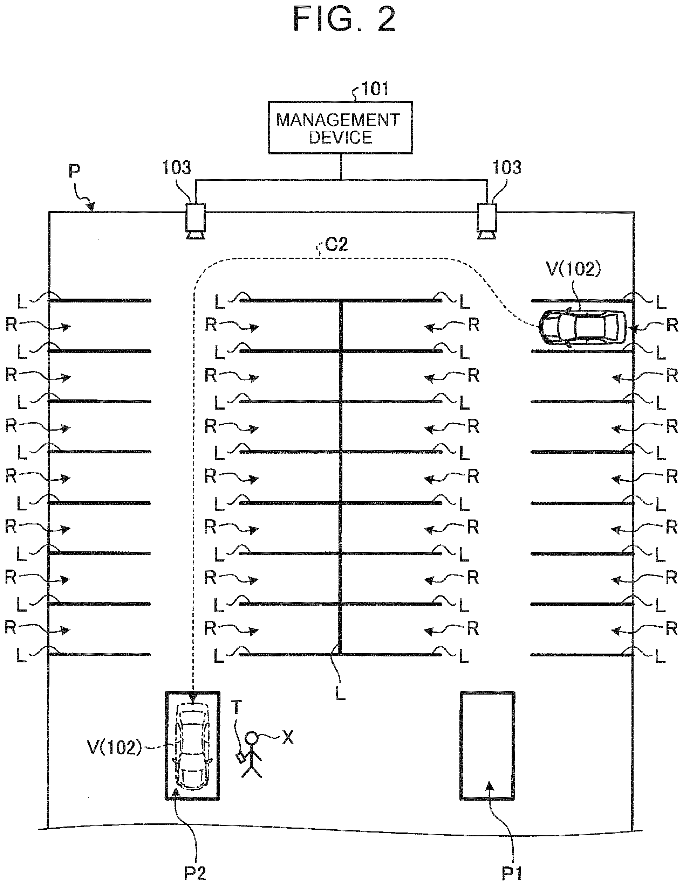

First, with reference to FIG. 1 and FIG. 2, an overview of an automated valet parking system according to an embodiment is described. The automated valet parking system is a system for achieving automated valet parking, including automated parking and automated retrieval like those described later, in a parking lot P having at least one parking space R that is delineated by predetermined boundary lines L, for example, white lines, such that the parking space R is provided with an opening portion (an entrance and exit for a vehicle V).

FIG. 1 is an illustrative and schematic diagram illustrating an example of automated parking in the automated valet parking system according to the embodiment. FIG. 2 is an illustrative and schematic diagram illustrating an example of automated retrieval in the automated valet parking system according to the embodiment.

As illustrated in FIG. 1 and FIG. 2, in the automated valet parking, after an occupant X gets out of the vehicle V in a predetermined drop-off area P1 within the parking lot P, automated parking (refer to an arrow C1 in FIG. 1) where the vehicle V autonomously moves from the drop-off area P1 to an available one of the parking spaces R and parks itself there is performed in response to a predetermined instruction, and after the automated parking is completed, automated retrieval where the vehicle V autonomously moves out of the parking space R to a predetermined pick-up area P2 and stops itself there is performed (refer to an arrow C2 in FIG. 2) in response to a predetermined call. The predetermined instruction and the predetermined call are achieved by operation of a terminal device T by the occupant X.

Further, as illustrated in FIG. 1 and FIG. 2, the automated valet parking system includes a management device 101 that is provided at the parking lot P, and a vehicle control system 102 that is mounted on the vehicle V. The management device 101 and the vehicle control system 102 are structured to be communicable with each other via wireless network.

The management device 101 is structured to monitor the situation in the parking lot P by receiving image data obtained from at least one monitoring camera 103 that captures images of the situation in the parking lot P and by receiving data output from various sensors (not illustrated) or the like installed in the parking lot P, and is structured to manage the parking spaces R on the basis of the monitoring result. Information that the management device 101 receives to monitor the situation in the parking lot P may be hereinafter sometimes referred to collectively as sensor data.

In the embodiment, the number and the arrangement of drop-off areas P1, pick-up areas P2, and parking spaces R in the parking lot P are not limited to the example illustrated in FIG. 1 and FIG. 2. The technology of the embodiment is applicable to parking lots that are structured in various ways different from the parking lot P illustrated in FIG. 1 and FIG. 2.

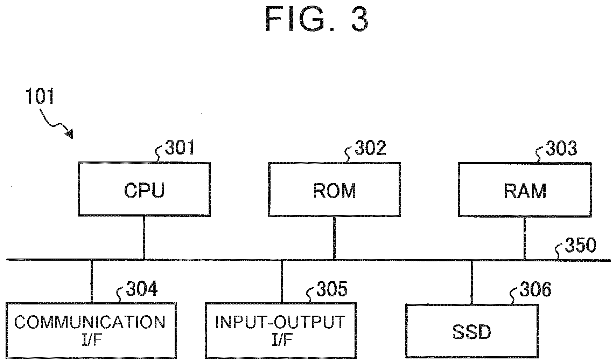

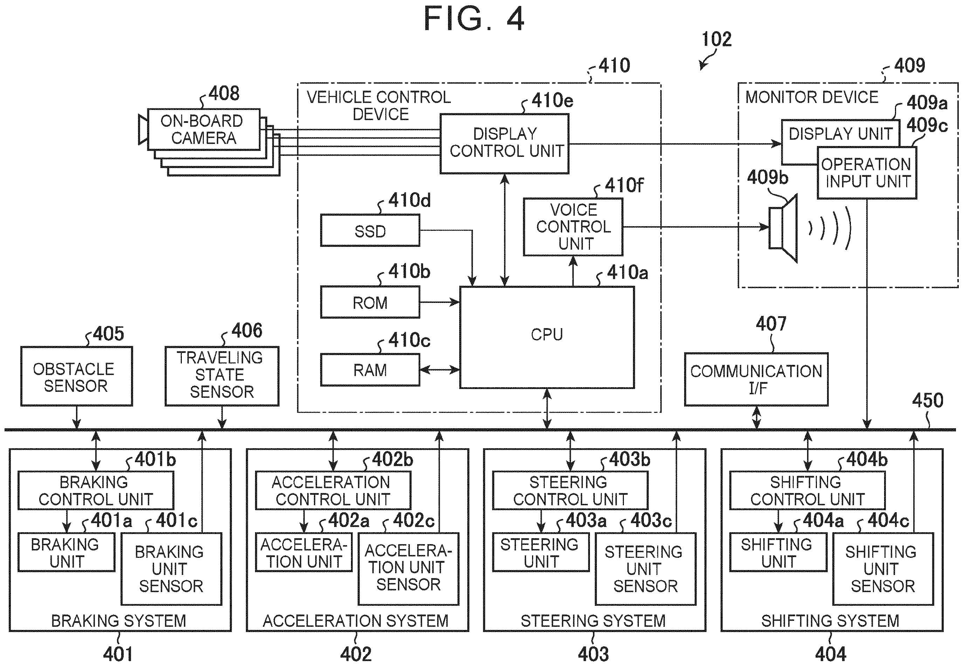

With reference to FIG. 3 and FIG. 4, the structures of the management device 101 and the vehicle control system 102 according to the embodiment are described. The structures illustrated in FIG. 3 and FIG. 4 are merely an example, and the structures of the management device 101 and the vehicle control system 102 according to the embodiment are configurable (modifiable) in various ways.

First, the hardware structure of the management device 101 according to the embodiment is described with reference to FIG. 3.

FIG. 3 is an illustrative and schematic diagram illustrating the hardware structure of the management device 101 according to the embodiment. As illustrated in FIG. 3, the management device 101 according to the embodiment has the same computer resources as a general information processing device such as a personal computer (PC).

In the example illustrated in FIG. 3, the management device 101 includes a central processing unit (CPU) 301, a read only memory (ROM) 302, a random access memory (RAM) 303, a communication interface (I/F) 304, an input-output interface (I/F) 305, and an solid state drive (SSD) 306. These hardware components are connected to each other via a data bus 350.

The CPU 301 is a hardware processor and exercises control over the management device 101. The CPU 301 reads out various control programs (computer programs) stored, for example, in the ROM 302, and implements various functions in accordance with instructions defined in the various control programs.

The ROM 302 is a nonvolatile primary storage device and stores parameters or the like necessary to execute the various control programs.

The RAM 303 is a volatile primary storage device and provides a working area for the CPU 301.

The communication interface 304 is an interface that implements communication between the management device 101 and an external device. For example, the communication interface 304 implements transmission and reception of signals by wireless communication between the management device 101 and the vehicle V (the vehicle control system 102).

The input-output interface 305 is an interface that implements connection between the management device 101 and an external device. Examples of the external device may include an input-output device that is used by an operator of the management device 101.

The SSD 306 is a rewritable nonvolatile secondary storage device. The management device 101 according to the embodiment may include a hard disk drive (HDD) as a secondary storage device, instead of the SSD 306 (or in addition to the SSD 306).

Next, the system structure of the vehicle control system 102 according to the embodiment is described with reference to FIG. 4.

FIG. 4 is an illustrative and schematic block diagram illustrating the system structure of the vehicle control system 102. As illustrated in FIG. 4, the vehicle control system 102 includes a braking system 401, an acceleration system 402, a steering system 403, a shifting system 404, an obstacle sensor 405, a traveling state sensor 406, a communication interface (I/F) 407, an on-board camera 408, a monitor device 409, a vehicle control device 410, and an on-board network 450.

The braking system 401 controls deceleration of the vehicle V. The braking system 401 includes a braking unit 401a, a braking control unit 401b, and a braking unit sensor 401c.

The braking unit 401a is a device for decelerating the vehicle V and includes, for example, a brake pedal.

The braking control unit 401b is an electronic control unit (ECU) and is structured from, for example, a computer having a hardware processor such as a CPU. The braking control unit 401b actuates the braking unit 401a by driving an actuator (not illustrated) on the basis of an instruction from the vehicle control device 410, thereby controlling the degree of deceleration of the vehicle V.

The braking unit sensor 401c is a device for detecting the state of the braking unit 401a. For example, when the braking unit 401a includes a brake pedal, the braking unit sensor 401c detects, as the state of the braking unit 401a, the position of the brake pedal or a pressure acting on the brake pedal. The braking unit sensor 401c outputs the detected state of the braking unit 401a to the on-board network 450.

The acceleration system 402 controls acceleration of the vehicle V. The acceleration system 402 includes an acceleration unit 402a, an acceleration control unit 402b, and an acceleration unit sensor 402c.

The acceleration unit 402a is a device for accelerating the vehicle V and includes, for example, an accelerator pedal.

The acceleration control unit 402b is an ECU and is structured from, for example, a computer having a hardware processor such as a CPU. The acceleration control unit 402b actuates the acceleration unit 402a by driving an actuator (not illustrated) on the basis of an instruction from the vehicle control device 410, thereby controlling the degree of acceleration of the vehicle V.

The acceleration unit sensor 402c is a device for detecting the state of the acceleration unit 402a. For example, when the acceleration unit 402a includes an accelerator pedal, the acceleration unit sensor 402c detects the position of the accelerator pedal or a pressure acting on the accelerator pedal. The acceleration unit sensor 402c outputs the detected state of the acceleration unit 402a to the on-board network 450.

The steering system 403 controls the direction of travel of the vehicle V. The steering system 403 includes a steering unit 403a, a steering control unit 403b, and a steering unit sensor 403c.

The steering unit 403a is a device for turning steerable wheels of the vehicle V and includes, for example, a steering wheel or a handle.

The steering control unit 403b is an ECU and is structured from, for example, a computer having a hardware processor such as a CPU. The steering control unit 403b actuates the steering unit 403a by driving an actuator (not illustrated) on the basis of an instruction from the vehicle control device 410, thereby controlling the direction of travel of the vehicle V.

The steering unit sensor 403c is a device for detecting the state of the steering unit 403a. For example, when the steering unit 403a includes a steering wheel, the steering unit sensor 403c detects the position of the steering wheel or the rotation angle of the steering wheel. On the other hand, when the steering unit 403a includes a handle, the steering unit sensor 403c may detect the position of the handle or a pressure acting on the handle. The steering unit sensor 403c outputs the detected state of the steering unit 403a to the on-board network 450.

The shifting system 404 controls the speed ratio of the vehicle V. The shifting system 404 includes a shifting unit 404a, a shifting control unit 404b, and a shifting unit sensor 404c.

The shifting unit 404a is a device for changing the speed ratio of the vehicle V and includes, for example, a shift lever.

The shifting control unit 404b is an ECU and is structured from, for example, a computer having a hardware processor such as a CPU. The shifting control unit 404b actuates the shifting unit 404a by driving an actuator (not illustrated) on the basis of an instruction from the vehicle control device 410, thereby controlling the speed ratio of the vehicle V.

The shifting unit sensor 404c is a device for detecting the state of the shifting unit 404a. For example, when the shifting unit 404a includes a shift lever, the shifting unit sensor 404c detects the position of the shift lever or a pressure acting on the shift lever. The shifting unit sensor 404c outputs the detected state of the shifting unit 404a to the on-board network 450.

The obstacle sensor 405 is a device for detecting information on an obstacle that may be located around the vehicle V. The obstacle sensor 405 includes a distance measurement sensor, such as a sonar, for detecting the distance to an obstacle. The obstacle sensor 405 outputs the detected information to the on-board network 450.

The traveling state sensor 406 is a device for detecting the traveling state of the vehicle V. For example, the traveling state sensor 406 includes the following: a wheel speed sensor that detects the wheel speed of the vehicle V; an acceleration sensor that detects longitudinal or lateral acceleration of the vehicle V; and a gyroscope sensor that detects the turning speed (angular velocity) of the vehicle V. The traveling state sensor 406 outputs the detected traveling state to the on-board network 450.

The communication interface 407 is an interface that implements communication between the vehicle control system 102 and an external device. For example, the communication interface 407 implements transmission and reception of signals by wireless communication between the vehicle control system 102 and the management device 101, and also implements transmission and reception of signals by wireless communication between the vehicle control system 102 and the terminal device T.

The on-board camera 408 is a device for capturing images of the situation around the vehicle V. For example, multiple on-board cameras 408 are provided to capture images of areas including road surfaces in front of, behind, and beside (on both the right and left sides of) the vehicle V. The image data obtained by the on-board camera 408 is used to monitor the situation around the vehicle V (including to detect an obstacle). The on-board camera 408 outputs the obtained image data to the vehicle control device 410. The image data obtained from the on-board camera 408 and data obtained from the various sensors included in the vehicle control system 102 may be hereinafter sometimes referred to collectively as sensor data.

The monitor device 409 is mounted, for example, on a dashboard in the cabin of the vehicle V. The monitor device 409 includes a display unit 409a, a voice output unit 409b, and an operation input unit 409c.

The display unit 409a is a device for displaying an image in accordance with an instruction from the vehicle control device 410. The display unit 409a is structured from, for example, a liquid crystal display (LCD) or an organic electroluminescent display (OELD).

The voice output unit 409b is a device for producing a voice output in accordance with an instruction from the vehicle control device 410. The voice output unit 409b is structured from, for example, a speaker.

The operation input unit 409c is a device for receiving an input from an occupant in the vehicle V. The operation input unit 409c is structured from, for example, a touch screen provided on a display screen of the display unit 409a, or a physical operation switch. The operation input unit 409c outputs the received input to the on-board network 450.

The vehicle control device 410 is a device for exercising control over the vehicle control system 102. The vehicle control device 410 is an ECU and has computer resources including a CPU 410a, a ROM 410b, and a RAM 410c.

More specifically, the vehicle control device 410 includes the CPU 410a, the ROM 410b, the RAM 410c, a SSD 410d, a display control unit 410e, and a voice control unit 410f.

The CPU 410a is a hardware processor and exercises control over the vehicle control device 410. The CPU 410a reads out various control programs (computer programs) stored, for example, in the ROM 410b, and implements various functions in accordance with instructions defined in the various control programs.

The ROM 410b is a nonvolatile primary storage device and stores parameters or the like necessary to execute the various control programs.

The RAM 410c is a volatile primary storage device and provides a working area for the CPU 410a.

The SSD 410d is a rewritable nonvolatile secondary storage device. The vehicle control device 410 according to the embodiment may include a HDD as a secondary storage device, instead of the SSD 410d (or in addition to the SSD 410d).

The display control unit 410e mainly governs the following, among various processes that are executed by the vehicle control device 410: image processing on image data obtained from the on-board camera 408; and generation of image data to be output to the display unit 409a of the monitor device 409.

The voice control unit 410f mainly governs the following, among various processes that are executed by the vehicle control device 410: generation of voice data to be output to the voice output unit 409b of the monitor device 409.

The on-board network 450 connects the braking system 401, the acceleration system 402, the steering system 403, the shifting system 404, the obstacle sensor 405, the traveling state sensor 406, the communication interface 407, the operation input unit 409c of the monitor device 409, and the vehicle control device 410 together in such a manner as to enable communication therebetween.

In order to achieve autonomous travel, such as the automated parking and the automated retrieval in the automated valet parking system, it is important to accurately find the current position of the vehicle V during the autonomous travel. In this regard, one conventional method (what is called odometry) estimates the current position of the vehicle V using a value detected by a wheel speed sensor or the like. However, this method may not always accurately find the current position of the vehicle V because an error in estimation result increases cumulatively with an increase in distance traveled by the vehicle V.

Therefore, according to the embodiment, the vehicle control device 410 is provided with functions described below to accurately find the current position of the vehicle V during the autonomous travel in the automated parking and in the automated retrieval. That is, according to the embodiment, the vehicle control device 410 is an example of a "vehicle position estimation device".

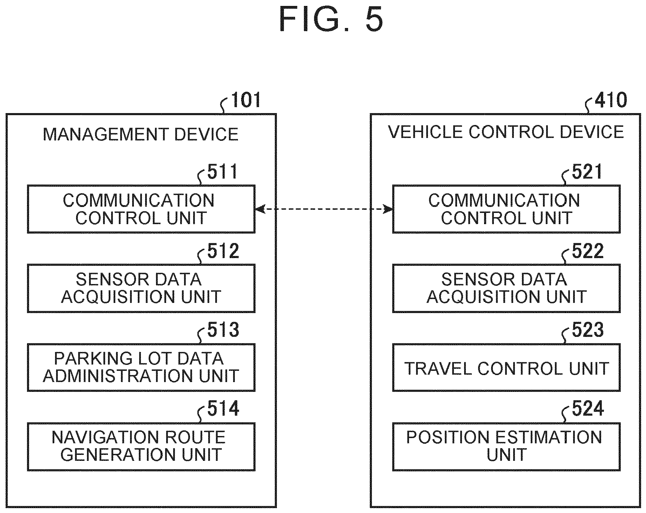

FIG. 5 is an illustrative and schematic block diagram illustrating functions of the management device 101 and the vehicle control device 410 according to the embodiment. The functions illustrated in FIG. 5 are implemented by cooperation between software and hardware. That is, in the example illustrated in FIG. 5, the function of the management device 101 is implemented as a result of execution of a predetermined control program that is stored, for example, in the ROM 302 and that is read out and executed by the CPU 301, and the function of the vehicle control device 410 is implemented as a result of execution of a predetermined control program that is stored, for example, in the ROM 410b and that is read out and executed by the CPU 410a. In the embodiment, the management device 101 and the vehicle control device 410 illustrated in FIG. 5 may be partially or wholly implemented by dedicated hardware (circuit) alone.

As illustrated in FIG. 5, the management device 101 according to the embodiment has a functional structure including a communication control unit 511, a sensor data acquisition unit 512, a parking lot data administration unit 513, and a navigation route generation unit 514.

The communication control unit 511 controls wireless communication with the vehicle control device 410. For example, the communication control unit 511 performs the following: authenticates the vehicle control device 410 by transmitting and receiving predetermined data to and from the vehicle control device 410; receives predetermined completion notifications that are output from the vehicle control device 410 when the automated parking and the automated retrieval are completed; and transmits, as needed, map data on the parking lot P and a navigation route that are described later.

The sensor data acquisition unit 512 acquires the sensor data described above from the monitoring camera 103 and various sensors (not illustrated) or the like installed in the parking lot P. The sensor data acquired by the sensor data acquisition unit 512 (in particular, image data obtained from the monitoring camera 103) may be used, for example, to check availability of the parking spaces R.

The parking lot data administration unit 513 manages data (information) on the parking lot P. For example, the parking lot data administration unit 513 manages map data on the parking lot P and availability of the parking spaces R. For example, when the automated parking is performed, the parking lot data administration unit 513 selects one parking space R among the parking spaces R that are available, and designates the selected one parking space R as a target parking space to which the vehicle V is to be moved in the automated parking. Further, if the parking space R is changed because the vehicle V moves again after the completion of the automated parking, the parking lot data administration unit 513 identifies the changed parking space R on the basis of sensor data acquired from the sensor data acquisition unit 512.

The navigation route generation unit 514 generates navigation routes to be directed to the vehicle control device 410 when the automated parking and the automated retrieval are performed. More specifically, the navigation route generation unit 514 generates, as the navigation route, a rough path from the drop-off area P1 to the target parking space when the automated parking is performed, and generates, as the navigation route, a rough path from the target parking space (the parking space R where the vehicle V is currently parked if the vehicle V has been moved after the automated parking) to the pick-up area P2 when the automated retrieval is performed.

On the other hand, as illustrated in FIG. 5, the vehicle control device 410 according to the embodiment has a functional structure including a communication control unit 521, a sensor data acquisition unit 522, a travel control unit 523, and a position estimation unit 524.

The communication control unit 521 controls wireless communication with the management device 101. For example, the communication control unit 521 performs the following: authenticates the vehicle control device 410 by transmitting and receiving predetermined data to and from the management device 101; transmits predetermined completion notifications to the management device 101 when the automated parking and the automated retrieval are completed; and receives, as needed, map data on the parking lot P and the navigation route from the management device 101. Thus, the communication control unit 521 functions as a map data acquisition unit that acquires map data on the parking lot P.

In the embodiment, for example, the map data includes information used to identify the absolute positions of various road markings (concrete examples are described later) that may be placed on a road surface of the parking lot P. The absolute position, as used herein, is a concept including an orientation (the absolute orientation) that the road marking has. That is, when a road marking includes a linear marking having a predetermined direction (orientation), not only the absolute position of the road marking, but also the absolute orientation indicated by the linear marking included in the road marking are identifiable from the map data.

The sensor data acquisition unit 522 is an example of an image data acquisition unit that acquires image data obtained by the on-board camera 408, and acquires sensor data including the image data and data output from various sensors provided in the vehicle control system 102. The sensor data acquired by the sensor data acquisition unit 522 may be used for various types of traveling control of the vehicle V to be performed by the travel control unit 523 described below, such as generating an actual travel route (including a parking route and a retrieval route) based on the navigation route received from the management device 101, and setting various parameters (vehicle speed, steering angle, direction of travel, etc.) that are necessary for the vehicle V to actually travel along the travel route.

The travel control unit 523 controls the braking system 401, the acceleration system 402, the steering system 403, the shifting system 404, etc. and thereby controls the traveling state of the vehicle V to perform various types of traveling control for achieving the automated parking and the automated retrieval. Examples of the various types of traveling control include start control from the drop-off area P1, travel control from the drop-off area P1 to the parking space R (including parking control), travel control from the parking space R to the pick-up area P2 (including retrieval control), and stop control into the pick-up area P2.

The position estimation unit 524 estimates the current position of the vehicle V by odometry described above, when the vehicle V is autonomously traveling in the automated parking and in the automated retrieval. Then, the position estimation unit 524 estimates the current position (the actual position) of the vehicle V by correcting the result estimated by odometry, on the basis of image data acquired by the sensor data acquisition unit 522, in such a manner as to cancel its cumulative errors. The actual position, as used herein, is a concept including the orientation (the actual orientation) of the vehicle V.

That is, according to the embodiment, during the autonomous travel, the position estimation unit 524 first detects, from image data acquired by the sensor data acquisition unit 522, road surface marking data related to a road surface marking located around the vehicle V and thus calculates the relative position of the road surface marking with respect to the vehicle V on the image data. Then, the position estimation unit 524 corrects the estimation result based on odometry, on the basis of the difference between a theoretical absolute position of the road surface marking that is identified on the basis of the relative position of the road surface marking, and a normal absolute position of the road surface marking that is based on parking lot data acquired by the communication control unit 531. The position estimation unit 524 sets the corrected value as a normal estimation value of the current position (the actual position) of the vehicle V. The relative position, as used herein, is a concept including a relative orientation of the road surface marking with respect to the vehicle V.

For example, according to the embodiment, when the vehicle V travels in a direction crossing the boundary lines L during the autonomous travel as in an example described later, the position estimation unit 524 detects road surface marking data on the basis of side image data that is image data representative of the situation in an area beside the vehicle V. The road surface marking data is related to the positions of end portions E of the boundary lines L closer to the vehicle V (closer to opening portions of the parking spaces R) and is also related to the orientations of the boundary lines L. Then, on the basis of the detected road surface marking data, the position estimation unit 524 calculates relative positions indicating the positions of the end portions E of the boundary lines L with respect to the vehicle V and calculates relative orientations indicating the orientations of the boundary lines L with respect to the vehicle V. Then, on the basis of the calculated relative positions and the relative orientations of the boundary lines L and on the basis of the absolute positions and the absolute orientations of the boundary lines L that are based on map data on the parking lot P, the position estimation unit 524 corrects the estimation results that are based on odometry and thus estimates the current position (the actual position and the actual orientation) of the vehicle V.

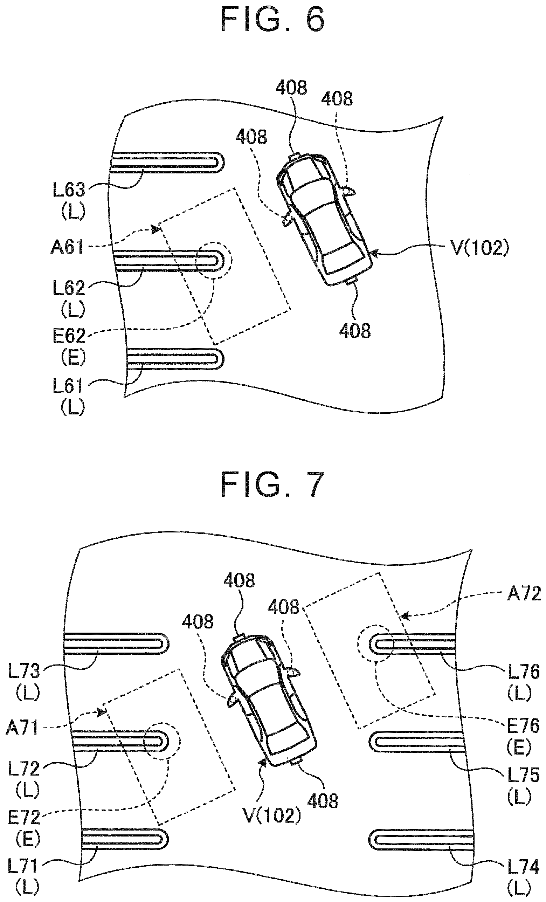

FIG. 6 is an illustrative and schematic diagram illustrating an example of a current position estimation method that may be performed by the position estimation unit 524 of the vehicle control device 410 according to the embodiment. In the example illustrated in FIG. 6, the vehicle V is traveling in a direction that crosses three boundary lines L61 to L63 located on the left side of the vehicle V.

In the example illustrated in FIG. 6, the capture area of the on-board camera 408 that is mounted to a left side portion of the vehicle V (for example, a side mirror) corresponds to an area A61 that covers an end portion E62 of the boundary line L62. Therefore, road surface marking data related to the position and orientation of the boundary line L62 is detectable by performing image recognition processing, such as while-line detection, on side image data obtained by the on-board camera 408 mounted to the left side portion of the vehicle V. The relative position of the boundary line L62 (more specifically, the relative position of the end portion E of the boundary line L62) and the relative orientation of the boundary line L62 (more specifically, a relative orientation indicating a direction in which the boundary line L62 extends), with respect to the vehicle V, are calculable using the detected road surface marking data. Further, a theoretical absolute position and a theoretical absolute orientation of the boundary line L62 are identifiable using the calculated relative position and relative orientation and using the estimation results of the position and orientation of the vehicle V that are based on odometry.

The theoretical absolute position (and absolute orientation) of the boundary line L62 is identified using the estimation result based on odometry as described above, and therefore may be affected by cumulative errors due to odometry. In contrast, as already described, since map data on the parking lot P managed by the management device 101 includes information for identifying the normal absolute positions (and absolute orientations) of the road surface markings, the map data includes boundary line data for identifying the normal absolute position (and absolute orientation) of the boundary line L62 as the road surface marking.

For this reason, according to the embodiment, the communication control unit 521 acquires the boundary line data as the map data from the management device 101. Further, the position estimation unit 524 evaluates a difference between the theoretical absolute position of the boundary line L62 that is identified on the basis of the relative position (including the relative orientation) described above, and the normal absolute position (including the absolute orientation) of the boundary line L62 that is identified on the basis of the boundary line data. Then, on the basis of the difference, the position estimation unit 524 corrects the deviation of the estimation result that is based on odometry, and estimates the corrected value as the actual position (including the actual orientation) of the vehicle V. This correction that takes account of both the relative position and the relative orientation is described in detail later with reference to the drawings, and therefore is not described here anymore.

In the example illustrated in FIG. 6, one road surface marking (the boundary line L62) is detected from side image data, and the actual position and the actual orientation of the vehicle V are estimated by calculating both the relative position and the relative orientation of the one road surface marking. Alternatively, according to the embodiment, as described below, when at least two road surface markings are detected from side image data, the actual position and the actual orientation of the vehicle V may be estimated on the basis of the positional relationship between the at least two road surface markings by calculating the relative positions of the at least two road surface markings only (without calculating the relative orientations).

FIG. 7 is an illustrative and schematic diagram explaining an example of a current position estimation method that is different from that illustrated in FIG. 6 and that may be performed by the position estimation unit 524 of the vehicle control device 410 according to the embodiment. In the example illustrated in FIG. 7, the vehicle V is traveling in a direction that crosses three boundary lines L71 to L73 located on the left side of the vehicle V and that crosses three boundary lines L74 to L76 located on the right side of the vehicle V.

In the example illustrated in FIG. 7, the capture area of the on-board camera 408 that is mounted to a left side portion of the vehicle V (for example, a side mirror) corresponds to an area A71 that covers an end portion E72 of the boundary line L72, and the capture area of the on-board camera 408 that is mounted to a right side portion of the vehicle V (for example, a side mirror) corresponds to an area A72 that covers an end portion E76 of the boundary line L76.

Therefore, in the example illustrated in FIG. 7, road surface marking data related to the positions of the end portions E72 and E76 of the boundary lines L72 and L76 is detectable by performing image recognition processing, such as while-line detection, on a set of side image data obtained by the two on-board cameras 408. The relative position of the boundary line L72 (more specifically, the relative position of the end portion E72 of the boundary line L72) and the relative position of the boundary line L76 (more specifically, the relative position of the end portion E76 of the boundary line L76), with respect to the vehicle V, are calculable using the detected road surface marking data. Further, theoretical absolute positions of the end portions E72 and E76 of the boundary lines L72 and L76 are identifiable using the calculated relative positions and using the estimation results based on odometry.

The position estimation unit 524 corrects deviations of the estimation results of the position and direction (orientation) of the vehicle V that are based on odometry, by checking the theoretical absolute positions of the end portions E72 and E76 of the boundary lines L72 and L76 identified on the basis of the relative positions against normal absolute positions of the end portions E72 and E76 of the boundary lines L72 and L76 identified on the basis of map data (boundary line data). In the example illustrated in FIG. 7, unlike in the example illustrated in FIG. 6, there are two points to be checked. Therefore, when the positional relationships between the vehicle V and these two points are identified, the deviation of the estimation result of the direction (orientation) of the vehicle V is correctable without the need to individually identify the orientation of each of the points.

As described above, in the example illustrated in FIG. 7, the actual position and the actual orientation of the vehicle V are both estimable by calculating the relative positions of the boundary lines L72 and L76 only, without calculating the relative orientations of the boundary lines L72 and L76. This correction that uses the relative positions only without the relative orientations is described in detail later with reference to the drawings, and therefore is not described here anymore.

In the examples illustrated in FIG. 6 and FIG. 7, one road surface marking is detected from each of the two pieces of side image data (left side image data and right side image data), so that two road surface markings (the boundary lines L72 and L76) are detected in total, and the positional relationship between the relative positions of these two road surface markings is calculated to estimate the actual position and the actual orientation of the vehicle V. Alternatively, according to the embodiment, as described below, the actual position and the actual orientation of the vehicle V may be estimated by simultaneously detecting multiple road surface markings from one side image data and by calculating the positional relationship between the relative positions of these multiple road surface markings.

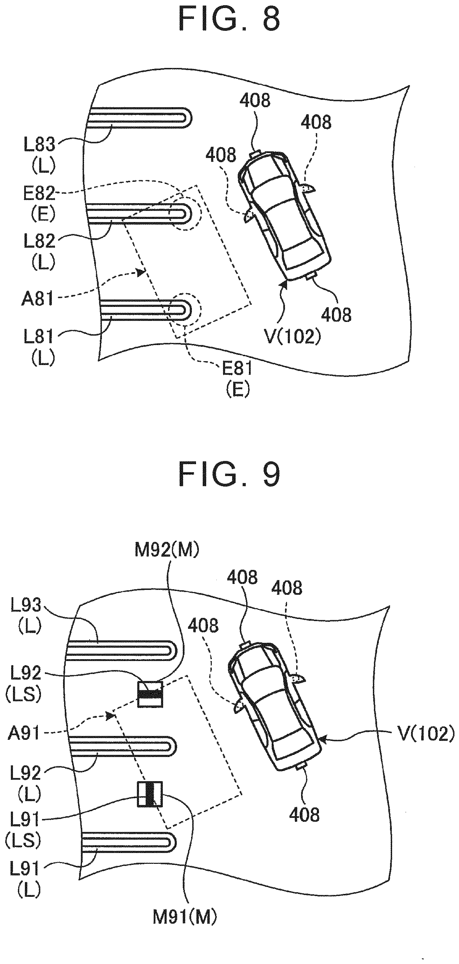

FIG. 8 is an illustrative and schematic diagram explaining an example of a current position estimation method that is different from those illustrated in FIG. 6 and FIG. 7 and that may be performed by the position estimation unit 524 of the vehicle control device 410 according to the embodiment. In the example illustrated in FIG. 8, the vehicle V is traveling in a direction that crosses three boundary lines L81 to L83 located on the left side of the vehicle V.

In the example illustrated in FIG. 8, the capture area of the on-board camera 408 that is mounted to a left side portion of the vehicle V (for example, a side mirror) corresponds to an area A81 that covers both an end portion E81 of the boundary line L81 and an end portion E82 of the boundary line L82. Therefore, in the example illustrated in FIG. 8, road surface marking data related to the positions of the end portions E81 and E82 of the boundary lines L81 and L82 is detectable by performing image recognition processing, such as while-line detection, on one piece of side image data obtained by the on-board camera 408 mounted to the left side portion of the vehicle V. The relative position of the boundary line L81 (more specifically, the relative position of the end portion E81 of the boundary line L81) and the relative position of the boundary line L82 (more specifically, the relative position of the end portion E82 of the boundary line L82), with respect to the vehicle V, are calculable using the detected road surface marking data. Further, theoretical absolute positions of the end portions E81 and E82 of the boundary lines L81 and L82 are identifiable using the calculated relative positions and using the estimation results that are based on odometry.

The position estimation unit 524 corrects deviations of the estimation results of the position and direction (orientation) of the vehicle V that are produced by odometry, by checking the theoretical absolute positions of the end portions E81 and E82 of the boundary lines L81 and L82 identified on the basis of the relative positions against normal absolute positions of the end portions E81 and E82 of the boundary lines L81 and L82 identified on the basis of map data (boundary line data). Although the example illustrated in FIG. 8 uses one side image data only, the actual position and orientation of the vehicle V is estimable on the basis of the relative positions only without the relative orientations, like in the example illustrated in FIG. 7.

In the example illustrated in FIG. 8, boundary lines L are used as road surface markings. Alternatively, according to the embodiment, as described below, road surface markings (markers M including line segments LS extending in predetermined directions) other than boundary lines L may be used.

FIG. 9 is an illustrative and schematic diagram explaining an example of a current position estimation method that is different from those illustrated in FIGS. 6 to 8 and that may be performed by the position estimation unit 524 of the vehicle control device 410 according to the embodiment. In the example illustrated in FIG. 9, the vehicle V is traveling in a direction that crosses three boundary lines L91 to L93 located on the left side of the vehicle V.

In the example illustrated in FIG. 9, two markers M91 and M92, in addition to the three boundary lines L91 to L93, are provided as road surface markings. The marker M91 includes a line segment LS91 and is provided between the boundary lines L91 and L92. On the other hand, the marker M92 includes a line segment LS92 and is provided between the boundary lines L92 and L93.

In the example illustrated in FIG. 9, the capture area of the on-board camera 408 that is mounted to a left side portion of the vehicle V (for example, a side mirror) corresponds to an area A91 that covers the markers M91 and M92. Therefore, road surface marking data that is related to the respective positions (for example, the central positions) of the markers M91 and M92 and that is related to the respective directions of the line segments LS91 and LS92 included in the markers M91 and M92 is detectable by performing image recognition processing, such as while-line detection, on side image data obtained by the on-board camera 408 mounted to the left side portion of the vehicle V. The relative positions of the markers M91 and M92 (the relative positions of the centers of the markers M91 and M92) and the orientations of the markers M91 and M92 (relative orientations indicating the directions of the line segments LS91 and LS92), with respect to the vehicle V, are calculable using the detected road surface marking data. Further, theoretical absolute positions and orientations of the markers M91 and M92 are identifiable using the calculated relative positions and relative orientations and using the estimation results of the position and orientation of the vehicle V that are based on odometry.

As in the examples illustrated in FIG. 6 and others, the theoretical relative positions (and relative orientations) of the markers M91 and M92 are identified using the estimation results that are based on odometry as described above, and therefore may be affected by cumulative errors due to odometry. In contrast, as already described, since map data on the parking lot P managed by the management device 101 includes information for identifying the normal absolute positions (and absolute orientations) of the road surface markings, the map data includes marker data for identifying the normal absolute positions (and absolute orientations) of the markers M91 and M92 as the road surface markings.

For this reason, according to the embodiment, the communication control unit 521 acquires the marker data as the map data from the management device 101. Further, the position estimation unit 524 evaluates a difference between the theoretical absolute positions of the markers M91 and M92 that are identified on the basis of the relative positions (including the relative orientations) described above, and the normal absolute positions (including the absolute orientations) of the markers M91 and M92 that are identified on the basis of the marker data. Then, on the basis of the difference, the position estimation unit 524 corrects the deviation of the estimation result that is based on odometry, and estimates the corrected value as the actual position (including the actual orientation) of the vehicle V.

In the examples illustrated in FIGS. 6 to 9, only either boundary lines L or markers M are used. Alternatively, according to the embodiment, both boundary lines L and markers M may be used. In particular, when the vehicle V makes a turn as described below, it is desirable to improve the accuracy of estimating the current position, and therefore, it is advantageous that both the boundary lines L and the markers M be taken into account to increase data on the basis of which the estimation is made.

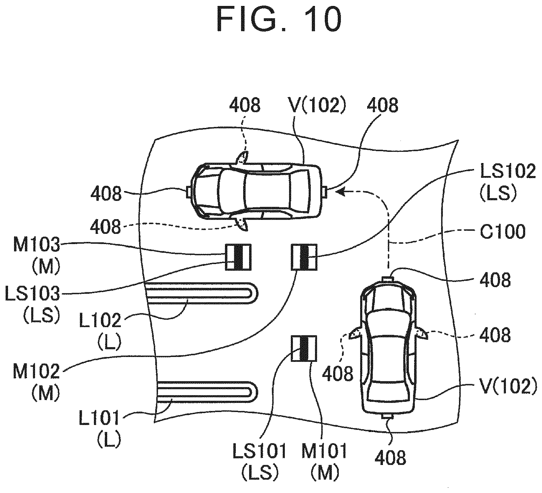

FIG. 10 is an illustrative and schematic diagram explaining an example of a current position estimation method that is different from those illustrated in FIGS. 6 to 9 and that may be performed by the position estimation unit 524 of the vehicle control device 410 according to the embodiment. In the example illustrated in FIG. 10, the vehicle V is making a left turn along an arrow C100 such that boundary lines L101 and L102 and markers M101 to M103 that are arranged near the boundary lines L101 and L102 in an L-shape are on the inside of the turn. The shapes of the markers M101 to M103 are not limited to the example illustrated in FIG. 10.

In the example illustrated in FIG. 10, the position estimation unit 524 acquires, from the sensor data acquisition unit 522 during the turn of the vehicle V, inside image data that is image data representative of the situation in an area on the inside of the turn. On the other hand, the communication control unit 521 acquires, as map data, both boundary line data and marker data from the management device 101. Then, the position estimation unit 524 detects, from the inside image data, road surface marking data related to the boundary lines L101 and L102 and the markers M101 to M103. Further, on the basis of the detected road surface marking data, the position estimation unit 524 calculates the relative positions of the boundary lines L101 and L102 and the markers M101 to M103 with respect to the vehicle V.

Then, on the basis of the calculated relative positions and the estimation results of the position and orientation of the vehicle V that are based on odometry, the position estimation unit 524 identifies theoretical absolute positions of the boundary lines L101 and L102 and the markers M101 to M103. Further, on the basis of the difference between the identified theoretical absolute positions and the normal absolute positions that are identified from the boundary line data and the marker data, the position estimation unit 524 corrects the deviation of the estimation results that are based on odometry, and estimates the corrected values as the actual position (including the actual orientation) of the vehicle V.

In the example illustrated in FIG. 10, three markers M (M101 to M103) are arranged in an L-shape. However, the number and arrangement of markers M are configurable (modifiable) in various ways, as long as the markers M are within the capture area of the on-board camera of the turning vehicle V. In the example illustrated in FIG. 10, the actual position of the vehicle V is estimated by taking into account both the boundary lines L and the markers M. Alternatively, according to the embodiment, the actual position of the vehicle V may be estimated by taking into account only the boundary lines L or the markers M, as long as at least either the boundary lines L or the markers M are taken into account. In this case, the communication control unit 521 needs to acquire, as map data, only either boundary line data or marker data that corresponds to road surface marking data to be taken into account.

In the examples illustrated in FIGS. 6 to 10, the end portions of the boundary lines L are structured in a rounded U-shape. Alternatively, according to the embodiment, the end portions of the boundary lines L may be structured in a rectangular shape. Further, according to the embodiment, the relative positions of the boundary lines L and the markers M may be detected not only using the side image data obtained by the on-board camera 408 mounted to the side portion of the vehicle V, but also using other image data such as front image data obtained by the on-board camera 408 mounted to a front portion (for example, a front bumper) of the vehicle V or rear image data obtained by the on-board camera 408 mounted to a rear portion (for example, a rear bumper) of the vehicle V.

Details of the correction that may be performed in FIGS. 6 to 10 are described here with reference to the drawings.

First, details of correction that may be performed in FIG. 6 or the like and that takes into account both the relative position and the relative orientation of one road surface marking are described.

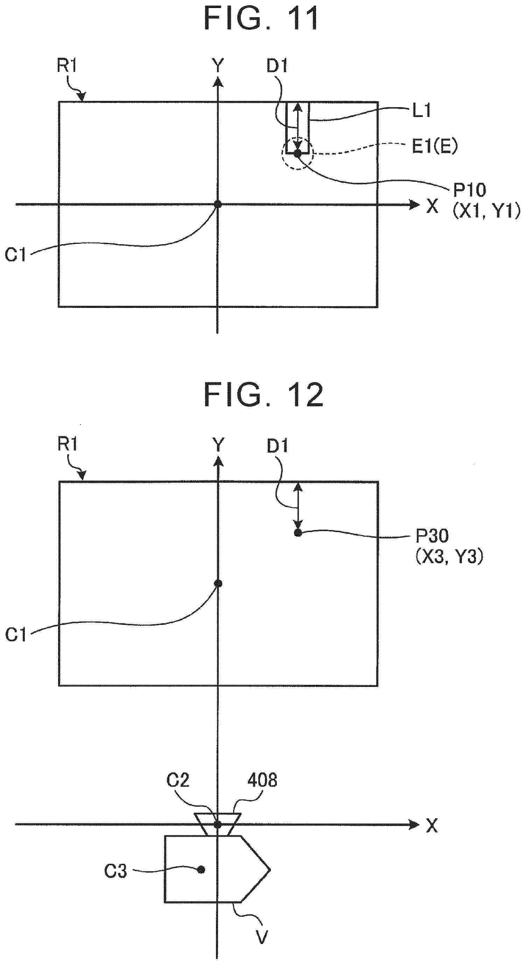

FIG. 11 is an illustrative and schematic diagram explaining details of correction that may be performed by the position estimation unit 524 of the vehicle control device 410 according to the embodiment and that takes into account both the relative position and the relative orientation of one road surface marking.

In FIG. 11, a rectangular area R1 is an area representing the capture area of the on-board camera 408 in plan view. The area R1 is created by applying a projective transformation to image data acquired by the on-board camera 408. A boundary line L1 extending in a direction D1, as an example of the road surface marking, is included in the area R1. In FIG. 11, for the sake of brevity, the shape of the boundary line L1 is illustrated in a simplified way.

As illustrated in FIG. 11, the position estimation unit 524 according to the embodiment first defines an X-Y coordinate system with an origin at a center C1 of the area R1 and then calculates values that represent the relative position and the relative orientation of the boundary line L1 with respect to the origin. The X-axis is set to coincide with the orientation of the vehicle V (not illustrated in FIG. 11), and the Y-axis is set to coincide with the orientation of the on-board camera 408. In the example illustrated in FIG. 11, coordinates (X1, Y1) of a central point P10 of an end portion E1 of the boundary line L1 is calculated as the value representative of the relative position, and a value indicative of the direction D1 of extension of the boundary line L1, for example, a counterclockwise angle (90 degrees in the illustrated example) with respect to the X-axis, is calculated as the value representative of the relative orientation.

Then, on the basis of a preset parameter, the position estimation unit 524 converts the coordinates (X1, Y1) into the dimension of actual distance. The parameter, as used herein, is a parameter (in units of m/dot) indicating how many meters corresponds to one dot of image data actually. The central point P10 after conversion is hereinafter sometimes referred to as a point P20, and coordinates of the point P20 are hereinafter sometimes referred to as (X2, Y2).

As described below, the position estimation unit 524 changes the origin of the X-Y coordinate system as appropriate and thus calculates the relative position (and the relative orientation) of the boundary line L1 with respect to the vehicle V.

FIG. 12 is an illustrative and schematic diagram following FIG. 11 and explaining details of correction that may be performed by the position estimation unit of the vehicle control device according to the embodiment and that takes into account both the relative position and the relative orientation of one road surface marking.

As illustrated in FIG. 12, upon completion of calculation of the coordinates (X2, Y2), the position estimation unit 524 changes the origin of the X-Y coordinate system from the center C1 to a center C2 of the on-board camera 408. Then, the position estimation unit 524 calculates coordinates (X3, Y3) of a point P30 corresponding to the point P20 and calculates a value indicative of the direction D1, with respect to the changed X-Y coordinate system. After the change in the origin, the X-axis is also set to coincide with the orientation of the vehicle V, and the Y-axis is also set to coincide with the orientation of the on-board camera 408, in the same manner as before the change in the origin. Thus, in the example illustrated in FIG. 12, a parameter as the value indicative of the direction D1 with respect to the X-axis does not change particularly before and after the change in the origin, and the center C1 before the change in the origin and the center C2 after the change in origin both lie on the Y-axis.

The distance between the center C2 of the on-board camera 408 and the center C1 of the area R1 corresponding to the capture area of the on-board camera 408 is predetermined according to factors including the specifications of the on-board camera 408. Therefore, in the example illustrated in FIG. 12, the coordinates (X3, Y3) after the change in the origin are easily calculable by just adding a predetermined parameter to the Y-component of the coordinates (X2, Y2).

Upon completion of calculation of the coordinates (X3, Y3), the position estimation unit 524 further changes the origin of the X-Y coordinate system from the center C2 of the on-board camera 408 to a center C3 of the vehicle V and further calculates coordinates of a point corresponding to the point P30, and a value indicative of the direction D1. The relationship between the centers C2 and C3 is predetermined according to factors including the specifications of the vehicle V. The coordinate values calculated in this way represent the relative position and the relative orientation of the boundary line L1 with respect to (the center C3 of) the vehicle V.

Upon completion of calculation of the relative position, the position estimation unit 524 identifies a theoretical absolute position and a theoretical absolute orientation of the boundary line L1 on the basis of the position and orientation of (the center C of) the vehicle V that are estimated by odometry.

On the other hand, the position estimation unit 524 extracts, from map data acquired by the communication control unit 521, boundary line data related to the boundary line L around the position of the vehicle V estimated by odometry (i.e., the boundary line L1). The boundary line data includes, for example, the (normal) absolute positions of both end points of the boundary line L1. An absolute orientation indicative of the direction D1 of extension of the boundary line L1 is identifiable by taking into account the positional relationship between the two end points. Thus, on the basis of the boundary line data extracted from the map data, the position estimation unit 524 identifies both the absolute position of the end portion E1 of the boundary line L1 and the absolute orientation representative of the direction of extension of the boundary line L1.

Then, the position estimation unit 524 evaluates a difference between the theoretical absolute position (and orientation) of the boundary line L1 that is identified on the basis of the image data and the normal absolute position (and orientation) of the boundary line L1 that is identified on the basis of the map data (the boundary line data). This difference corresponds to cumulative errors of estimation results of the position and orientation of the vehicle V that are produced by odometry. Therefore, the position estimation unit 524 corrects the estimation results of the position and orientation of the vehicle V produced by odometry to cancel the cumulative errors, and sets the corrected values as the normal current position (actual position and orientation) of the vehicle V.

Next, details of correction that may be performed in FIG. 7 or the like and that takes into account the relative positions only of multiple road surface markings are described. This correction is basically the same as the correction described above, except that this correction does not take into account individual relative orientations of multiple road surface markings.

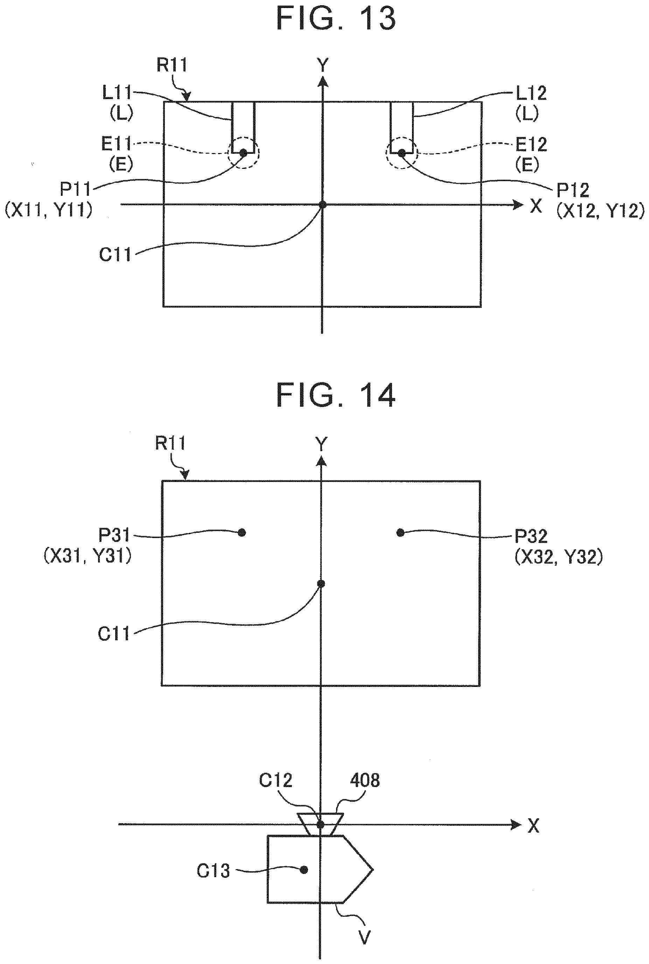

FIG. 13 is an illustrative and schematic diagram explaining details of correction that may be performed by the position estimation unit 524 of the vehicle control device 410 according to the embodiment and that takes into account the relative positions only of multiple road surface markings. In FIG. 13, for the sake of brevity, the shapes of the on-board camera 408 and the vehicle V are illustrated in a simplified way.

In FIG. 13, a rectangular area R11 is an area representing the capture area of the on-board camera 408 in plan view. The area R11 is created by applying a projective transformation to image data acquired by the on-board camera 408. Two boundary lines L11 and L12, as an example of the road surface markings, are included in the area R11. In FIG. 13, as in FIG. 11, for the sake of brevity of description, the shapes of the boundary lines L are illustrated in a simplified way.

As illustrated in FIG. 13, the position estimation unit 524 according to the embodiment first defines an X-Y coordinate system with an origin at a center C11 of the area R11 and then calculates values that represent the relative positions of end portions E11 and E12 of the boundary lines L11 and L12 with respect to the origin. In the example illustrated in FIG. 13, as the relative positions, coordinates (X11, Y11) of a central point P11 of the end portion E11 of the boundary line L11, and coordinates (X12, Y12) of a central point P12 of the end portion E12 of the boundary line L12 are calculated.

Then, on the basis of a preset parameter (that is the same as that already described), the position estimation unit 524 converts the coordinates (X1, Y1) and (X12, Y12) into the dimension of actual distance. The central points P11 and P12 after conversion are hereinafter sometimes referred to respectively as points P21 and P22, and coordinates of the points P21 and P22 are hereinafter sometimes referred to respectively as (X21, Y21) and (X22, Y22).

As described below, the position estimation unit 524 changes the origin of the X-Y coordinate system as appropriate and thus calculates the relative positions of the boundary lines L11 and L12 with respect to the vehicle V.

FIG. 14 is an illustrative and schematic diagram following FIG. 13 and explaining details of a current position estimation method that may be performed by the position estimation unit 524 of the vehicle control device 410 according to the embodiment and that is based on the relative positions only of multiple road surface markings without the relative orientations thereof.

As illustrated in FIG. 14, upon completion of calculation of the coordinates (X21, Y21) and (X22, Y22), the position estimation unit 524 changes the origin of the X-Y coordinate system from the center C11 to a center C12 of the on-board camera 408. Then, the position estimation unit 524 calculates both coordinates (X31, Y31) and (X32, Y32) of points P31 and P32 corresponding to the points P21 and P22, with respect to the changed X-Y coordinate system.

Upon completion of calculation of the coordinates (X31, Y31) and (X32, Y32) of the points P31 and P32, the position estimation unit 524 further changes the origin of the X-Y coordinate system from the center C12 of the on-board camera 408 to a center C13 of the vehicle V and further calculates coordinates of points corresponding to the points P3 with respect to the changed X-Y coordinate system. The coordinate values calculated in this way represent the relative positions of the boundary lines L11 and L12 with respect to (the center C13 of) the vehicle V.

Upon completion of calculation of the relative positions, the position estimation unit 524 identifies theoretical absolute positions and theoretical absolute orientations of the boundary lines L11 and L12 on the basis of the relative positions and the position of (the center C13 of) the vehicle V that is estimated by odometry.

The position estimation unit 524 evaluates a difference between the theoretical absolute positions of the boundary lines L11 and L12 that are identified on the basis of the image data and the normal absolute positions of the boundary lines L11 and L12 that are identified on the basis of the map data (the boundary line data). Then, the position estimation unit 524 corrects the estimation result of the position of the vehicle V produced by odometry. As long as the deviations of the theoretical absolute positions of the boundary lines L11 and L12 from the normal absolute positions thereof are found, the deviation of the orientation of the vehicle V is also found on the basis of the positional relationship among the three points including the vehicle V. Therefore, the estimation result of the orientation of the vehicle V produced by odometry is also correctable on the basis of the difference. Then, the position estimation unit 524 sets the corrected value as the normal current position (actual position and orientation) of the vehicle V.

Although the above description illustrates that the actual position of the vehicle V is estimated using the results of image recognition processing on the two boundary lines L (L11 and L12), three or more road surface markings may be subjected to image recognition processing. The road surface markings used to estimate the actual position of the vehicle V is not limited to the boundary lines L. For example, in the parking lot P where both the boundary lines L and the markers M are provided as road surface markings, the actual position of the vehicle V may be estimated using the results of image recognition processing on at least two markers M, or the actual position of the vehicle V may be estimated using both at least one boundary line L and at least one marker M.

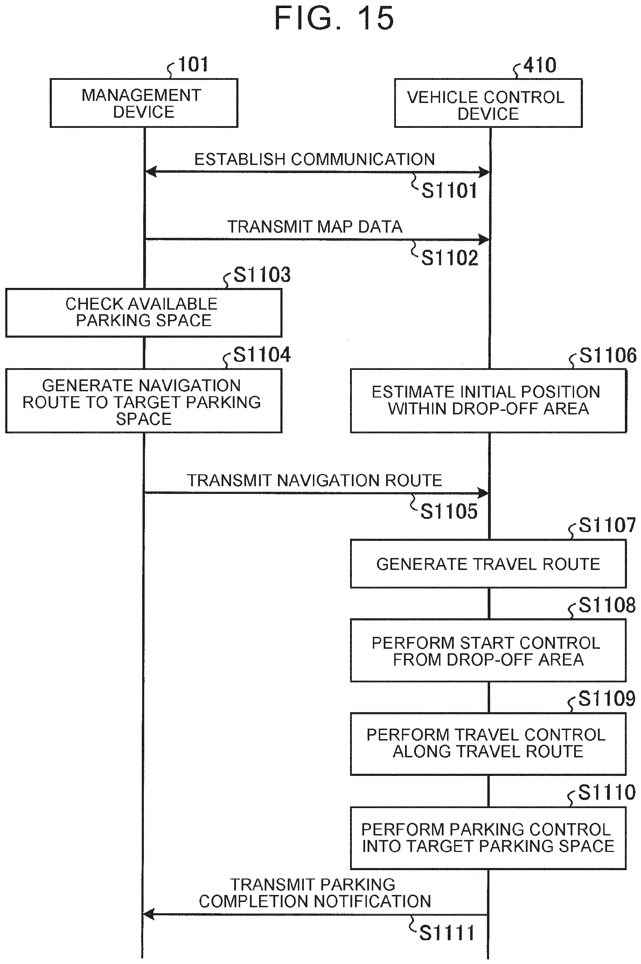

Next, with reference to FIGS. 15 to 19, processes executed in the automated valet parking system according to the embodiment is described.

FIG. 15 is an illustrative and schematic sequence diagram illustrating the flow of processes that are executed by the management device 101 and the vehicle control device 410 when the automated parking is performed in the embodiment. The process sequence illustrated in FIG. 15 starts when the occupant X provides a predetermined instruction that triggers the automated parking by operating the terminal device T at the drop-off area P1.

The process sequence illustrated in FIG. 15 starts in S1101 where the management device 101 and the vehicle control device 410 establish communication therebetween. In this S1101, authentication is made through transmission and reception of identification information (ID), and travel authorization to achieve autonomous travel under control of the management device 101 is received.

When the communication is established in S1101, the management device 101 transmits map data on the parking lot P to the vehicle control device 410 in S1102.

Then, in S1103, the management device 101 checks available parking spaces R and designates one of the available parking spaces R as a target parking space to be assigned to the vehicle V.

Then, in S1104, the management device 101 generates a (rough) navigation route from the drop-off area P1 to the target parking space designated in S1103.

Then, in S1105, the management device 101 transmits the navigation route generated in S1104 to the vehicle control device 410.

On the other hand, after receiving the map data transmitted in S1102 from the management device 101, the vehicle control device 410 estimates in S1106 an initial position within the drop-off area P1. The initial position is the current position of the vehicle V within the drop-off area P1 and is used as a starting point to start from the drop-off area P1. The initial position is estimated by a method that uses image data obtained by the on-board cameras 408, as with the current positon estimation methods already described. In the example illustrated in FIG. 15, the procedure of S1106 is executed before the procedure of S1105, but the procedure of S1106 may be executed after the procedure of S1105.

After estimating the initial position in S1106 and receiving the navigation route transmitted in S1105 from the management device 101, the vehicle control device 410 generates, in S1107 on the basis of elements including the initial position estimated in S1106, a travel route that is to be actually traveled during the automated parking and that is more accurate than the navigation route.

Then, in S1108, the vehicle control device 410 performs control to start from the drop-off area P1.

Then, in S1109, the vehicle control device 410 performs control to travel along the travel route generated in S1107. This traveling control is performed while estimating the current position by a method that uses image data like the one described above. The flow of processes executed to estimate the current position is described in detail later with reference to other drawings, and therefore is not described here anymore.

Then, in S1110, the vehicle control device 410 performs control to park in the target parking space.

Then, when the parking control in S1110 is completed, the vehicle control device 410 transmits a parking completion notification to the management device 101 in S1111.

In this way, the automated parking in the automated valet parking is achieved.

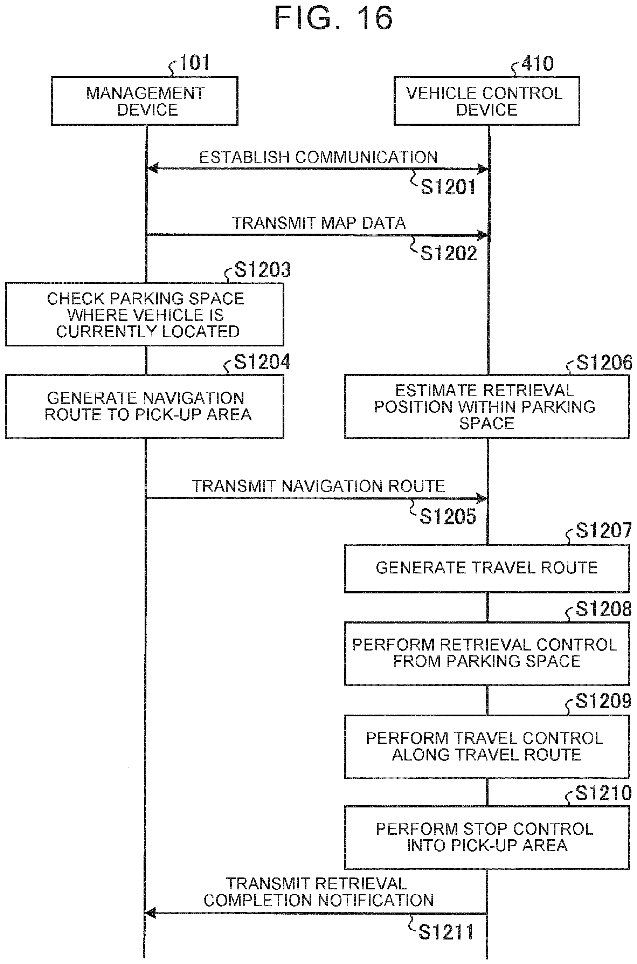

FIG. 16 is an illustrative and schematic sequence diagram illustrating the flow of processes that are executed by the management device 101 and the vehicle control device 410 when the automated retrieval is performed in the embodiment. The process sequence illustrated in FIG. 16 starts when the occupant X makes a predetermined call that triggers the automated retrieval by operating the terminal device T at the pick-up area P2.

The process sequence illustrated in FIG. 16 starts in S1201 where the management device 101 and the vehicle control device 410 establish communication therebetween. In this S1201, like in S1101 of FIG. 15 described above, authentication is made through transmission and reception of identification information (ID), and travel authorization to achieve autonomous travel under control of the management device 101 is received.

When the communication is established in S1201, the management device 101 transmits map data on the parking lot P to the vehicle control device 410 in S1202.

Then, in S1203, the management device 101 checks the parking space R where the vehicle V equipped with the vehicle control device 410 communicating therewith is currently located. In the embodiment, the procedure of S1203 is executed on the basis of image data obtained by the monitoring camera 103 and other appropriate data.

Then, in S1204, the management device 101 generates a (rough) navigation route from the parking space R to the pick-up area P2 checked in S1203.

Then, in S1205, the management device 101 transmits the navigation route generated in S1204 to the vehicle control device 410.

On the other hand, after receiving the map data transmitted in S1202 from the management device 101, the vehicle control device 410 estimates in S1206 a retrieval position within the parking space R where the vehicle V is currently located. The retrieval position refers to the current position of the vehicle V within the parking space R and is used as a starting point to leave the parking space R. Methods similar to the current position estimation methods described already (methods that use map data and predetermined road surface marking data that is detected from image data by image recognition processing) may be used to estimate the retrieval position. In the example illustrated in FIG. 16, the procedure of S1206 is executed before the procedure of S1205, but the procedure of SS1206 may be executed after the procedure of S1205.

After estimating the retrieval position in S1206 and receiving the navigation route transmitted in S1205 from the management device 101, the vehicle control device 410 generates, in S1207 on the basis of elements including the retrieval position estimated in S1206, a travel route that is to be actually traveled during the automated retrieval and that is more accurate than the navigation route.

Then, in S1208, the vehicle control device 410 performs control to leave the parking space R.

Then, in S1209, the vehicle control device 410 performs control to travel along the travel route generated in S 1207. This traveling control is performed while estimating the current position by a method (details are described later) that uses image data like the one described above, as with the traveling control performed in S1109 in FIG. 15.

Then, in S1210, the vehicle control device 410 performs control to stop in the pick-up area P2.

Then, when the stop control in S1210 is completed, the vehicle control device 410 transmits a retrieval completion notification to the management device 101 in S1211.

In this way, the automated retrieval in the automated valet parking is achieved.

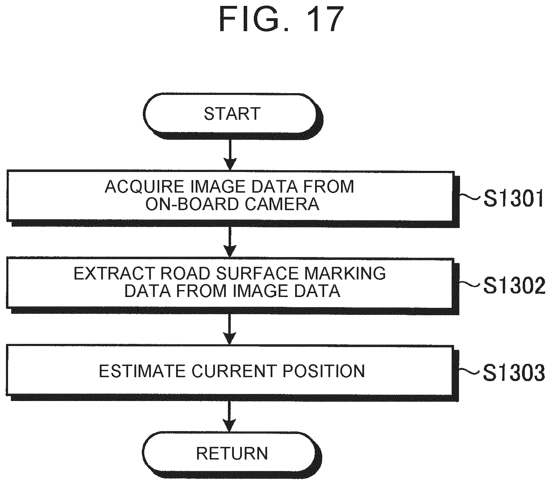

FIG. 17 is an illustrative and schematic flowchart illustrating the flow of a current position estimation process included in traveling control that is performed by the vehicle control device 410 when the automated parking and the automated retrieval are performed in the embodiment. The process flow illustrated in FIG. 17 is repeatedly executed during autonomous travel of the vehicle V, for example, in S1109 illustrated in FIG. 15 and in S1209 illustrated in FIG. 16.

The process flow illustrated in FIG. 17 starts in S1301 where the vehicle control device 410 acquires image data (side image data) from the on-board cameras 408. For example, in the situation illustrated in FIG. 10, the vehicle control device 410 acquires inside image data that is side image data corresponding to the inside of a turn.

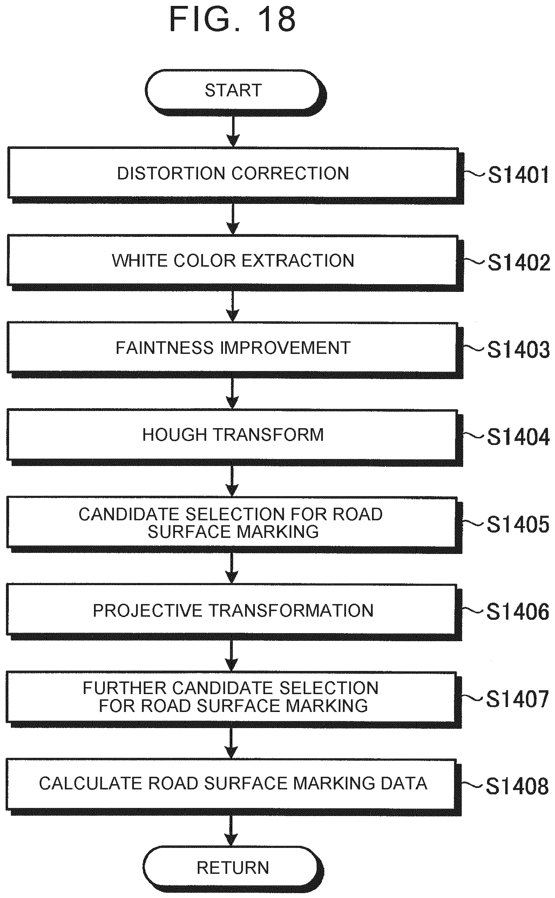

Then, in S1302, the vehicle control device 410 extracts, from the image data acquired in S 1301, road surface marking data related to road surface markings on the image data by predetermined image recognition processing. In this S 1302, processing is performed in accordance with, for example, a process flow illustrated in next FIG. 18.

FIG. 18 is an illustrative and schematic flowchart illustrating the flow of a road surface marking data calculation process that is performed by the vehicle control device 410 when the traveling control is performed in the embodiment. As an example, the flow of a process of calculating road surface marking data related to the boundary lines L is described below.

The process flow illustrated in FIG. 18 starts in S1401 where the vehicle control device 410 performs distortion correction processing on image data acquired from the on-board cameras 408.

Then, in S1402, the vehicle control device 410 performs white color extraction processing on the image data that has undergone the distortion correction processing in S1401. Since road surface markings, such as the boundary lines L and the markers M, are commonly drawn with white color, the procedure of S1402 makes it possible to extract a while region including the road surface markings (the boundary lines L) from the image data that has undergone the distortion correction processing.

Then, in S1403, the vehicle control device 410 performs faintness improvement processing to improve a faint portion that may be included in the white region extracted in S1402.

Then, in S1404, the vehicle control device 410 performs a Hough transform on the image data that has undergone the faintness improvement processing in S 1403, thereby extracting, from the image data, linear regions as candidates for the road surface markings (the boundary lines L).

Then, in S1405, the vehicle control device 410 selects the candidates for the road surface markings (the boundary lines L) extracted in S 1404, on the basis of a predetermined criteria.

Then, in S1406, the vehicle control device 410 applies a projective transformation to the image data including the candidates selected in S1405, thereby generating image data corresponding to an area representing the capture area of the on-board camera 408 in plan view.

Then, in S 1407, the vehicle control device 410 further selects candidates for the road surface markings (the boundary lines L) included in the image data that has undergone the projective transformation, on the basis of a predetermined criteria.

Then, in S 1408, the vehicle control device 410 calculates, as road surface marking data, the relative positions (possibly including the relative orientations) of the candidates extracted in S1407.

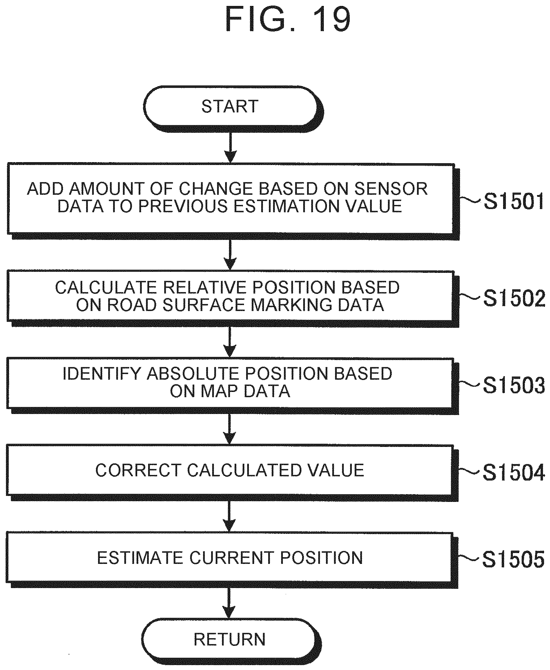

The procedures of S1401 to S1408 described above are completed, and then the process proceeds to S 1303 of FIG. 17. In S 1303, the vehicle control device 410 executes processing in accordance with a flowchart illustrated in next FIG. 19 to estimate the current position of the vehicle V.

FIG. 19 is an illustrative and schematic flowchart illustrating the flow of a current position estimation process that is executed by the vehicle control device 410 when the traveling control is performed in the embodiment.

The process flow illustrated in FIG. 19 starts in S1501 where the vehicle control device 410 calculates the current position of the vehicle V that is based on odometry, by adding the amount of change based on sensor data, i.e., the amount of change in position of the vehicle V estimated by odometry, to the previous estimation value related to the current position of the vehicle V.

Then, in S1502, on the basis of the road surface marking data calculated by the process flow illustrated in FIG. 18, the vehicle control device 410 calculates the relative positions (possibly including the relative orientations) of the road surface markings with respect to the current position calculated in S1501. Theoretical absolute positions of the road surface markings are identifiable using the relative positions calculated in S1502 and the value calculated in S1501.

Then, in S1503, the vehicle control device 410 identifies the absolute positions (possibly including the absolute orientations) of the road surface markings on the basis of map data acquired by the communication control unit 521. More specifically, the vehicle control device 410 extracts, from the absolute positions of all the road surface markings included in the map data, the ones that are close to the theoretical absolute positions of the road surface markings identified using the results calculated in S1502 (may be referred to as partial data corresponding to an area around the theoretical absolute positions), thereby identifying the normal absolute positions of the road surface markings that are to be compared in the procedure of the next S1504 with the theoretical absolute positions so as to evaluate differences therebetween. For example, when the image data used to calculate the road surface marking data is the left side image data, the vehicle control device 410 extracts the absolute positions that are close to the theoretical absolute positions, by extracting, from the absolute positions of all the road surface markings included in the map data, absolute positions corresponding to the left side of the current positon of the vehicle V that is based on odometry. When road surface markings are boundary lines, the boundary lines are commonly spaced at intervals of about 2.5 meters. This interval of 2.5 meters is greater than an error expected in odometry. Therefore, in the embodiment, there is hardly any possibility that the normal absolute positions of the road surface markings are incorrectly identified by the procedure of S1503.

Then, in S1504, the vehicle control device 410 evaluate differences between the theoretical absolute positions of the road surface markings identified on the basis of the results calculated in S1502, and the normal absolute positions of the road surface markings identified in S1503, and corrects the value calculated in S1501, i.e., the value of the current position of the vehicle V calculated by odometry, on the basis of the differences.

Then, in S1505, the vehicle control device 410 estimates the value corrected in S1504 as the normal current position of the vehicle V. In the embodiment, various parameters (vehicle speed, steering angle, direction of travel, etc.) necessary for autonomous travel of the vehicle V are set on the basis of the results estimated in S1505.

The vehicle control device 410 according to the embodiment may execute the following procedures in accordance with S1501 to S1505 described above.

Specifically, in S1501, the vehicle control device 410 first calculates the actual orientation of the vehicle V that is based on odometry, by adding the amount of change in orientation based on sensor data, i.e., the amount of change in orientation of the vehicle V estimated by odometry, to the previous estimation value related to the current orientation (the actual orientation) of the vehicle V. Then, the vehicle control device 410 calculates the current position of the vehicle V that is based on odometry, by adding the amount of change in position based on sensor data, i.e., the amount of change in position of the vehicle V estimated by odometry, to the previous estimation value related to the current position (the actual position) of the vehicle V in the actual orientation of the vehicle V based on odometry.

In the embodiment, if there is no previous estimation value related to the actual orientation and the actual position in S1501 yet, the actual orientation and the actual position of the vehicle V on the basis of odometry may be used, without being processed, in the next S1502 and subsequent procedures thereto.

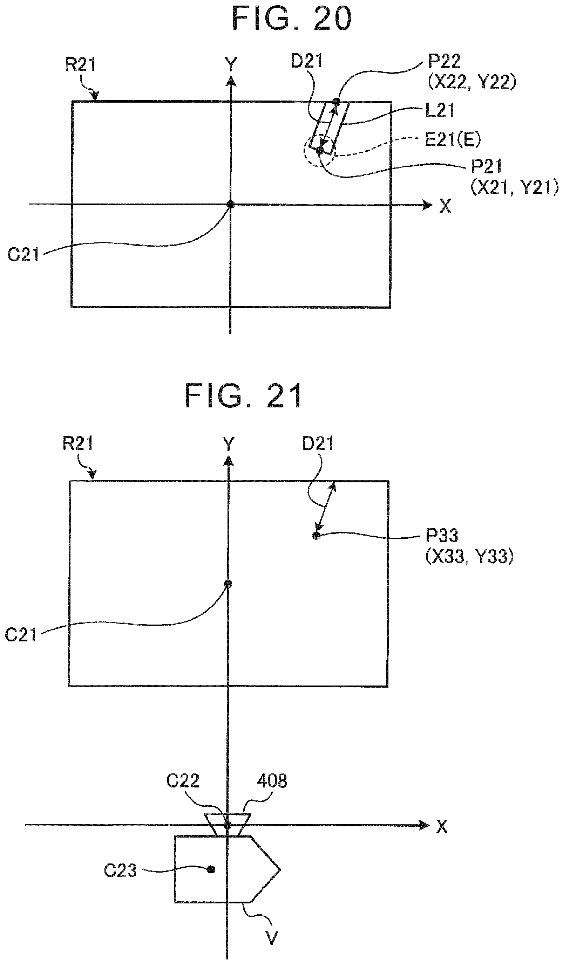

Then, in S1502, on the basis of the road surface marking data calculated by the process flow illustrated in FIG. 18, the vehicle control device 410 calculates the relative positions and the relative orientations of the road surface markings with respect to the current position calculated in S1501, for example, in a manner illustrated in next FIGS. 20 and 21.

FIG. 20 is an illustrative and schematic diagram explaining details of identification of the relative positions and the relative orientations of the road surface markings that may be performed by the position estimation unit 524 of the vehicle control device 410 according to the embodiment.

In FIG. 20, a rectangular area R21 corresponds to the capture area of the on-board camera 408. A boundary line L21 extending in a direction D21, as an example of the road surface markings, is included in the rectangular area R21. In FIG. 20, for the sake of brevity, the shape of the boundary line L21 is illustrated in a simplified way.

As illustrated in FIG. 20, the position estimation unit 524 according to the embodiment first defines an X-Y coordinate system with an origin at a center C21 of the area R21 and then calculates values that represent the relative position and the relative orientation of the boundary line L21 with respect to the origin. The X-axis is set to coincide with the orientation of the vehicle V (not illustrated in FIG. 20), and the Y-axis is set to coincide with the orientation of the on-board camera 408.

Then, the position estimation unit 524 calculates the coordinates (X21, Y21) of a central point P21 of an end portion E21 of the boundary line L21 and the coordinates (X22, Y22) of an end point P22 of the boundary line L21 on the boundary side of the boundary line L21. Then, on the basis of these two coordinates, the position estimation unit 524 calculates, using an arctangent function or the like, a slope representative of the direction D21 of extension of the boundary line L21, for example, as a counterclockwise angle with respect to the X-axis.

Then, on the basis of a preset parameter, the position estimation unit 524 converts the distance from the coordinates (X21, Y21) of the central point P21 of the end portion E21 of the boundary line L21 to the center C21 of the area R21 into the dimension of actual distance. The parameter, as used herein, is a parameter (in units of m/dot) indicating how many meters corresponds to one dot of image data actually.

Then, as illustrated in next FIG. 21, the position estimation unit 524 acquires a positional relationship between the center C21 of the area R21 and a center C22 (a mounting position) of the on-board camera 408 and a positional relationship between the center C22 of the on-board camera 408 and a center C23 of the vehicle V. On the basis of these positional relationships, the position estimation unit 524 performs a coordinate transformation as appropriate and thus calculates the relative position and the relative orientation of the boundary line L21 with respect to (the actual positon of) the vehicle V. The coordinate transformation described below is the same concept as those described already with reference to FIGS. 11 to 14.

FIG. 21 is an illustrative and schematic diagram following FIG. 20 and explaining details of identification of the relative positions and the relative orientations of the road surface markings that may be performed by the position estimation unit 524 of the vehicle control device 410 according to the embodiment.

As illustrated in FIG. 21, the position estimation unit 524 changes the origin of the X-Y coordinate system from the center C21 to the center C22 of the on-board camera 408. Then, with respect to the changed X-Y coordinate system, the position estimation unit 524 calculates the coordinates (X33, Y33) of a point P33 corresponding to the central point P21 of the end portion E21 of the boundary line L21 and also calculates a value indicative of the direction D21 of extension of the boundary line L21.

It is noted that when the orientations of the X-axis and the Y-axis are kept unchanged before and after the coordinate transformation, the value indicative of the direction D21 remains constant before and after the coordinate transformation. In this case, since the positional relationship between the center C22 of the on-board camera 408 and the center C21 of the area R21 corresponding to the capture area of the on-board camera 408 is predetermined according to factors including the specifications of the on-board camera 408, the coordinate transformation is achievable by adjusting the Y-axis component only.

Upon completion of calculation of the values on the X-Y coordinate system with the origin at the center C22, the position estimation unit 524 further changes the origin of the X-Y coordinate system from the center C22 to the center C23, on the basis of the positional relationship between the center C22 of the on-board camera 408 and the center C23 of the vehicle V that is predetermined according to factors including the specifications of the vehicle V. Then, the position estimation unit 524 calculates the coordinates of a point corresponding to the point P33 and a value indicative of the direction D21 on the X-Y coordinate system with the changed origin, respectively, as the relative position and the relative orientation of the boundary line L21 with respect to (the center C3 of) the vehicle V.

Then, the position estimation unit 524 identifies the theoretical absolute position of the end portion E21 of the boundary line L21 and the theoretical absolute orientation indicative of the direction D21 of extension of the boundary line L21, on the basis of the relative position and the relative orientation of the boundary line L21 with respect to (the center C3 of) the vehicle V that are acquired by the method described above, and the actual position and the actual orientation of the vehicle V that are calculated in S1501.

The terms "absolute position" and "absolute orientation" as used in the present disclosure may be indicated by values specified in a geographic coordinate system that has the same meaning all over the world, such as latitude and longitude, or may be indicated by values specified in a given coordinate system that makes sense only in the parking lot P.

Returning to FIG. 19, upon completion of the procedure of S1502, the vehicle control device 410 identifies, in S1503, the absolute positions and the absolute orientations of the road surface markings on the basis of the map data acquired by the communication control unit 521. More specifically, the vehicle control device 410 extracts, from the absolute positions of all the road surface markings included in the map data, the ones that are close to the theoretical absolute positions of the road surface markings identified using the results calculated in S1502 (may be referred to as partial data corresponding to an area around the theoretical absolute positions), thereby identifying the normal absolute positions of the road surface markings that are to be compared in the procedure of the next S1504 with the theoretical absolute positions so as to evaluate differences therebetween and also identifying the normal absolute orientations corresponding to the normal absolute positions.

In the embodiment, if none of the absolute positions of all the road surface markings included in the map data has a degree of closeness, greater than a certain value, to the theoretical absolute positions of the road surface markings identified using the results calculated in S1502, the next S1504 and subsequent procedures thereto may not be executed.

In S1504, the vehicle control device 410 evaluates differences of the theoretical absolute positions and the theoretical absolute orientations of the road surface markings that are identified on the basis of the results calculated in S1502, respectively from the normal absolute positions and the normal absolute orientations of the road surface markings that are identified in S1503. Then, on the basis of these differences, the vehicle control device 410 corrects the estimation values of the actual position and the actual orientation of the vehicle V calculated in S 1501.

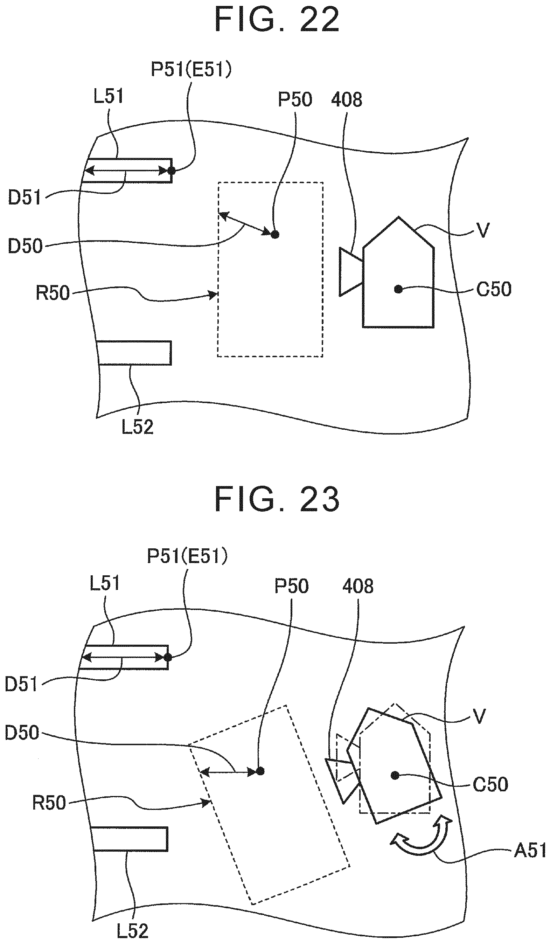

More specifically, the position estimation unit 524 of the vehicle control device 410 corrects the actual orientation of the vehicle V such that the theoretical and normal absolute orientations of the road surface markings coincide with each other, in a manner as illustrated in next FIGS. 22 and 23.

FIG. 22 is an illustrative and schematic diagram explaining details of correction of the actual orientation of the vehicle V that may be performed by the position estimation unit 524 of the vehicle control device 410 according to the embodiment. FIG. 23 is an illustrative and schematic diagram following FIG. 22 and explaining details of correction of the actual orientation of the vehicle V that may be performed by the position estimation unit 524 of the vehicle control device 410 according to the embodiment.

In FIGS. 22 and 23, a rectangular area R50 corresponds to the capture area of the on-board camera 408, and a point P50 and an arrow D50 within the rectangular area R50 respectively correspond to the theoretical absolute position and the theoretical absolute orientation of the road surface marking (a boundary line L51) identified on the basis of the results calculated in S1502. In FIGS. 22 and 23, for the sake of brevity, the shapes of boundary lines L51 and L52 are illustrated in a simplified way. The following description assumes that in Step 1503 the normal absolute position of a point P51 corresponding to an end portion E51 of the boundary line L51 and the normal absolute orientation of an arrow D51 corresponding to the direction of extension of the boundary line L51 are extracted from the map data to be respectively compared with the theoretical absolute position and the theoretical absolute orientation so as to evaluate differences therebetween.

As illustrated in FIGS. 22 and 23, the position estimation unit 524 of the vehicle control device 410 first performs a rotation transformation (refer to an arrow A51) about a center C50 of the vehicle V, such that the slope of the arrow D50 indicative of the theoretical absolute orientation of the boundary line L51 coincides with the slope of the arrow D51 indicative of the normal absolute orientation of the boundary line L51, on the basis of their difference (an angle indicative of the difference between the slopes). Thus, in terms of orientation consistency, the coordinates of the point P50 indicative of the theoretical absolute position of the boundary line L51 and the value of the arrow F50 indicative of the theoretical absolute orientation of the boundary line L51 are corrected appropriately, and the actual orientation of the vehicle V is also corrected appropriately.

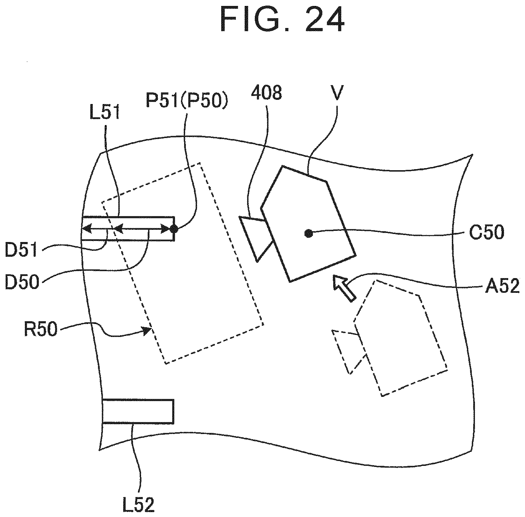

Then, upon completion of the actual orientation of the vehicle V, the position estimation unit 524 of the vehicle control device 410 corrects the actual position of the vehicle V such that the theoretical absolute position of the road surface marking coincides with the normal absolute position thereof, in a manner as illustrated in the next FIG. 24.

FIG. 24 is an illustrative and schematic diagram explaining details of correction of the actual position of the vehicle V that may be performed by the position estimation unit 524 of the vehicle control device 410 according to the embodiment. It is noted that the example illustrated in FIG. 24 uses the same situation and symbols as the example illustrated in FIG. 23.

As illustrated in FIG. 24, after performing a rotation transformation like the one illustrated in FIG. 23, the position estimation unit 524 of the vehicle control device 410 translates (refer to an arrow A52) the center C50 of the vehicle V, such that the coordinates of the point P50 indicative of the theoretical absolute position of the boundary line L51 coincide with the coordinates of the point P50 indicative of the normal absolute position of the boundary line L51, on the basis of their difference (the distance between the two points). Thus, in terms of orientation consistency, the coordinates of the point P50 indicative of the theoretical absolute position of the boundary line L51 is corrected appropriately, and the actual orientation of the vehicle V is also corrected appropriately.

As described above, the position estimation unit 524 of the vehicle control device 410 according to the embodiment is capable of correcting the actual position of the vehicle V on the basis of the difference between the theoretical and normal absolute positions of the road surface marking after correcting the actual orientation of the vehicle V on the basis of the difference between the theoretical and normal absolute orientations of the road surface marking.

Returning to FIG. 15, upon completion of the correction in S1504, the vehicle control device 410 estimates, in S1505, the corrected actual position and the actual orientation respectively as the normal actual position and the normal actual orientation of the vehicle V. In the embodiment, various parameters (vehicle speed, steering angle, direction of travel, etc.) necessary for autonomous travel of the vehicle V are set on the basis of the results estimated in S1505.

As described so far, a vehicle control device 410 according to the embodiment includes a travel control unit 523 that controls a traveling state of a vehicle V to achieve autonomous travel in a parking lot P. Further, the vehicle control device 410 includes the following: a communication control unit 521 that acquires parking lot data capable of identifying the absolute position of a road surface marking, including the absolute orientation thereof, provided on a road surface of the parking lot P; a sensor data acquisition unit 522 that acquires image data obtained by an on-board camera 408; and a position estimation unit 524 that calculates the relative position of the vehicle V, including the relative orientation thereof, on the image data during the autonomous travel by detecting road surface marking data related to the road surface marking from the image data, and that estimates the actual positon of the vehicle V, including the actual orientation thereof, on the basis of the calculated relative position and the parking lot data.

On the basis of the above structure, the embodiment is capable of accurately finding the current position (the actual position including the actual orientation) of the vehicle V during the autonomous travel by taking into account deviations between the theoretical position (and orientation) of the road surface marking identified using the relative position calculated on the basis of the image data, and the normal absolute position (and the absolute orientation) of the road surface marking identified on the basis of the parking lot data.

According to the embodiment, the position estimation unit 524 may calculate the relative position (including the relative orientation) of the road surface marking located on either the left or right side of the vehicle V by detecting the road surface marking data from side image data that is the image data representative of the situation on either the left or right side of the vehicle V. This structure is capable of easily calculating the relative position (including the relative orientation) of the road surface marking by using the side image data that tends to capture the road surface marking.

Further, according to the embodiment, the communication control unit 521 may acquire, as the parking lot data, boundary line data capable of identifying the absolute position of a boundary line L that is the road surface marking indicative of a boundary of a parking space R that is pre-provided in the parking lot P, and the position estimation unit 524 may calculate the relative position (including the relative orientation) of the boundary line L by detecting, as the road surface marking data, the position of an end portion E of the boundary line L and the orientation of the boundary line L on the image data, and may estimate the actual position (including the actual orientation) of the vehicle V on the basis of the calculated relative position and the boundary line data. This structure is capable of easily estimating the actual position of the vehicle V by using the boundary line L that is commonly provided as the road surface marking indicative of the boundary of the parking space R.

In a structure like the one described above using the boundary line L, the following of the boundary line L on the image data are detected as the road surface marking data by the position estimation unit 524: the position of the end portion E located on an opening portion side of the parking space R that is delineated by the boundary line L in such a manner as to have an opening portion (an entrance and exit for the vehicle V); and the direction of extension of the boundary line L including the end portion E (the longitudinal direction of the parking space R). This structure is capable of easily estimating the actual orientation and the actual position of the vehicle V by using the position of the end portion E of the boundary line L that is located on the opening portion side of the parking space R and the direction of extension of the boundary line L including the end portion E.

In a structure like the one described above using the boundary line L, the following of the boundary line L on the image data are detected as the road surface marking data by the position estimation unit 524: the position of the central point of the end portion E; and part in the direction of extension of the boundary line L including the end portion E (the longitudinal direction of the parking space R). This structure is capable of easily estimating the actual orientation and the actual position of the vehicle V by using the position of the central point of the end portion E of the boundary line L and the direction of extension of the boundary line L including the end portion E.

Further, according to the embodiment, the communication control unit 521 may acquire, as the parking lot data, marker data that is capable of identifying the absolute position (including the absolute orientation) of a first marker (for example, the markers M91 and M92 including the line segments LS91 and LS92 illustrated in FIG. 9) that includes a first line segment and that is the road surface marking pre-provided around a route along which the vehicle V travels during the autonomous travel. The position estimation unit 524 may calculate the relative position (including the relative orientation) of the first marker with respect to the vehicle V by detecting, as the road surface marking data, the position of the first marker on the image data and the direction of the first line segment included in the first marker on the image data, and may estimate the actual position (the actual orientation) of the vehicle V on the basis of the calculated relative position and the first marker data. This structure is capable of easily estimating the actual position of the vehicle V by using the first marker.

Further, according to the embodiment, the communication control unit 521 may acquire, as the parking lot data, boundary line data and marker data. The boundary line data is capable of identifying the absolute position of a boundary line L pre-provided in the parking lot P. The marker data is capable of identifying the absolute position of a second marker (for example, the markers M101 to M103 including the line segments LS101 to LS103 illustrated in FIG. 10) including a second line segment and provided in an area around the boundary line L and on the inside of a route along which the vehicle V makes a turn during the autonomous travel. When the vehicle V makes the turn, the position estimation unit 524 calculates the relative positions of the boundary line L and the second marker that are located on the inside of the turn of the vehicle V by detecting, as the road surface marking data, data related to the boundary line L and the second marker from inside image data that is the image data representative of the situation on the inside of the turn of the vehicle V, and estimates the actual position of the vehicle V on the basis of the calculated relative positions, the boundary line data, and the second marker data. This structure is capable of accurately estimating the actual position of the vehicle during the turn by using the boundary line L and the second marker.

Further, in the embodiment, the position estimation unit 524 first detects, as the road surface marking data, a first value indicative of the orientation and position of the road surface marking in a first coordinate system on the image data (for example, a coordinate system with an origin at the center of the image data) (refer to FIG. 11 and FIG. 20). Then, the position estimation unit 524 converts the first value in the first coordinate system into a second value in a second coordinate system associated with the on-board camera 408 (for example, a coordinate system with an origin at the center of the on-board camera 408) (refer to FIG. 12 and FIG. 21). Then, the position estimation unit 524 converts the second value in the second coordinate system into a third value in a third coordinate system associated with the vehicle V (for example, a coordinate system with an origin at the center of the vehicle V), and thus calculates the third value as the relative orientation and the relative position of the road surface marking with respect to the vehicle V (refer to FIG. 12 and FIG. 21). This structure is capable of easily calculating the relative orientation and the relative position of the road surface marking with respect to the vehicle V by coordinate transformation.

Further, in the embodiment, the position estimation unit 524 calculates the theoretical absolute orientation and the theoretical absolute position of the road surface marking on the basis of estimation values of the actual orientation and the actual position of the vehicle V and on the basis of the relative orientation and the relative position of the road surface marking. The estimation values of the actual orientation and the actual position of the vehicle V are based on previous estimation results of the actual orientation and the actual position of the vehicle V and based on the amounts of change in the actual orientation and the actual position of the vehicle V that are based on odometry. Then, the position estimation unit 524 extracts, from the parking lot data, partial data corresponding to an area around the theoretical absolute position, corrects the estimation values of the actual orientation and the actual position of the vehicle V on the basis of differences of the theoretical absolute position from the absolute orientation and the absolute position that are based on the partial data, and estimates the actual orientation and the actual position of the vehicle V on the basis of the corrected values. This structure is capable of easily estimating the actual orientation and the actual position of the vehicle V by using the partial data, not using all the parking lot data.

In this case, after correcting the estimation value of the actual orientation such that the theoretical absolute orientation coincides with the absolute orientation that is based on the partial data, the position estimation unit 524 corrects the estimation value of the actual position such that the theoretical absolute position coincides with the absolute position that is based on the partial data. This structure is capable of easily correcting the actual orientation and the actual position of the vehicle V in a stepwise manner.

In the embodiment, the communication control unit 521 may acquire parking lot data including information on the absolute position of each of multiple road surface markings. During the autonomous travel, the position estimation unit 524 may calculate the relative positions (not including relative orientations) of at least two of the multiple road surface markings with respect to the vehicle V on the image data by detecting road surface marking data related to the at least two road surface markings from the image data, and may estimate the actual position of the vehicle V including the actual orientation thereof on the basis of the calculated relative positions and the parking lot data. This structure is capable of accurately finding the current position (the actual position including the actual orientation) of the vehicle during the autonomous travel by taking into account deviations of the theoretical positions of the at least two road surface markings (and the positional relationship therebetween) that are identified using the relative positions calculated on the basis of the image data from the (normal) absolute positions of the at least two road surface markings (and the positional relationship therebetween) that are identified on the basis of the parking lot data, without taking into account the relative positions of the road surface markings.

In the above structure that calculates the relative positions only of multiple road surface markings, the position estimation unit 512 may calculate the relative position of at least one first road surface marking and the relative position of at least one second road surface marking by detecting, as the road surface marking data, a first position of the first road surface marking (for example, the position of the end portion E72 of the boundary line L72 illustrated in FIG. 7) from left side image data and by detecting, as the road surface marking data, a second position of the second road surface marking (for example, the position of the end portion E76 of the boundary line L76 illustrated in FIG. 7) from right side image data. This structure is capable of accurately calculating the relative positions of at least two road surface markings by using two images of different types (the left side image data and the right side image data).

Further, in the above structure that calculates the relative positions only of multiple road surface markings, the position estimation unit 524 may calculate the relative positions of at least two road surface markings that are located on either the left side or the right side of the vehicle V by detecting, as the road surface marking data, the position of each of the at least two road surface markings (for examples, the positions of the end portions E81 and E82 of the boundary lines L81 and L82 illustrated in FIG. 8) from one piece of the side image data. This structure is capable of easily calculating the relative positions of at least two road surface markings by using an image of one type (the side image data) only.

In this case, the position estimation unit 524 detects, as the road surface marking data, the positions of end portions E of at least two boundary lines L on the image data, and the end portions E are located on an opening portion side (an entrance and exit for the vehicle V) of a parking space that is delineated by the boundary lines L in such a manner as to have the opening portion. This structure is capable of easily estimating the actual position of the vehicle V by using the positions of the end portions E of the at least two boundary lines L that are located on the opening portion side of the parking space R.

Further, in this structure, the position estimation unit 524 detects, as the road surface marking data, the positions of the central points of the end portions E of the at least two boundary lines L on the image data. This structure is capable of easily estimating the actual position of the vehicle V by using the positions of the central points of the end portions E of the at least two boundary lines L.

Further, in the above structure that calculates the relative positions only of multiple road surface markings, the communication control unit 521 may acquire, as the parking lot data, boundary line data and the marker data. The boundary line data is capable of identifying the absolute positions of end portions E of multiple boundary lines L. The marker data is capable of identifying the absolute positions of multiple markers M. In this case, the position estimation unit 524 may estimate the actual position of the vehicle V by detecting the road surface marking data that is related to at least two of the multiple boundary lines L, at least two of the multiple markers M, or both at least one of the multiple boundary lines L and at least one of the multiple markers M. This structure is capable of easily estimating the actual position of the vehicle V on the basis of a combination of any two or more of the multiple boundary lines L and the multiple markers M.

Further, in the above structure that calculates the relative positions only of multiple road surface markings, the position estimation unit 524 may first detect, as the road surface marking data, first values indicative of the positions of at least two road surface markings in a first coordinate system on the map data (for example, a coordinate system with an origin at the center of the image data) (refer to FIG. 13). Then, the position estimation unit 524 may convert the first values in the first coordinate system into second values in a second coordinate system associated with the on-board camera 408 (for example, a coordinate system with an origin at the center of the on-board camera 408) (refer to FIG. 14). Then, the position estimation unit 524 converts the second values in the second coordinate system into third values in a third coordinate system associated with the vehicle V (for example, a coordinate system with an origin at the center of the vehicle V), and thus calculates the third values as the relative positions of the at least two road surface markings with respect to the vehicle V (refer to FIG. 14). This structure is capable of easily calculating the relative positions of at least two road surface markings with respect to the vehicle V by coordinate transformation.

In the vehicle position estimation device according to another example, the position estimation unit 524 may calculate theoretical absolute positions of at least two road surface markings on the basis of an estimation value of the actual position of the vehicle V and on the basis of the relative positions of the at least two road surface markings. The estimation value of the actual position of the vehicle is based on a previous estimation result of the actual position of the vehicle V and based on an amount of change in the actual position of the vehicle V that is based on odometry. Then, the position estimation unit 524 may extract, from the parking lot data, partial data corresponding to an area around the theoretical absolute positions, may correct the estimation value of the actual position of the vehicle V on the basis of differences of the theoretical absolute positions from the absolute positions, and may estimate the actual position of the vehicle V on the basis of the corrected value. This structure is capable of easily estimating the actual position of the vehicle V by using the partial data, not using all the parking lot data.

The embodiment described above illustrates that the technology of the present invention is applied to automated valet parking systems. However, the technology of the present invention is applicable to parking systems other than automated valet parking systems, as long as appropriate road surface markings are provided in a parking lot, and the parking systems are capable of acquiring data related to the absolute positions of the road surface markings.

The embodiment described above illustrates that the vehicle control device provided as a vehicle position estimation device includes the travel control unit, in addition to the sensor data acquisition unit as a parking lot data acquisition unit, the sensor data acquisition unit as an image data acquisition unit, and the position estimation unit. However, in the embodiment, a device other than vehicle control device and not including the travel control unit may be provided as the vehicle position estimation device, as long as the other device includes at least the parking lot data acquisition unit, the image data acquisition unit, and the position estimation unit described above.

Although embodiments of the present invention have been described above, the embodiments are merely given by way of example and are not intended to limit the scope of the invention. The novel embodiments described above may be implemented in various forms, and various omissions, substitutions, and changes may be made without departing from the spirit of the invention. The embodiments and modifications thereof fall within the scope and sprit of the invention, as defined by the claims and equivalent thereof.

### Description of the Reference Numerals

408: ON-BOARD CAMERA
410: VEHICLE CONTROL DEVICE (VEHICLE POSITION ESTIMATION DEVICE)
521: COMMUNICATION CONTROL UNIT (PARKING LOT DATA ACQUISITION UNIT
522: SENSOR DATA ACQUISITION UNIT (IMAGE DATA ACQUISITION UNIT)
523: TRAVEL CONTROL UNIT
524: POSITION ESTIMATION UNIT
E, E1, E11, E12, E21, E51, E62, E72, E76, E81, E82: END PORTION
L, L1, L11, L12, L21, L51, L52, L61-L63, L71-L76, L81-L83, L91-L93, L101-L102: BOUNDARY LINE
M, M91, M92, M101-M103: MARKER
P: PARKING LOT
R: PARKING SPACE
V: VEHICLE

## Claims

1. A vehicle position estimation device comprising:
a parking lot data acquisition unit that acquires parking lot data capable of identifying an absolute orientation and an absolute position of a road surface marking provided on a road surface of a parking lot;
an image data acquisition unit that acquires image data obtained by an on-board camera that captures a situation around a vehicle; and
a position estimation unit that calculates a relative orientation and a relative position of the road surface marking with respect to the vehicle on the image data by detecting road surface marking data related to the road surface marking from the image data, and that estimates an actual orientation and an actual position of the vehicle on the basis of the calculated relative orientation, the calculated relative position, and the parking lot data.

2. The vehicle position estimation device according to claim 1, wherein
the position estimation unit calculates the relative orientation and the relative position of the road surface marking that is located on either a left side or a right side of the vehicle by detecting the road surface marking data from side image data that is the image data representative of the situation on either the left side or the right side of the vehicle.

3. The vehicle position estimation device according to claim 1, wherein
the parking lot data acquisition unit acquires, as the parking lot data, boundary line data capable of identifying the absolute orientation and the absolute position of a boundary line that is the road surface marking indicative of a boundary of a parking space pre-provided in the parking lot, and
the position estimation unit calculates the relative orientation and the relative position of the boundary line by detecting, as the road surface marking data, a position of an end portion of the boundary line and an orientation of the boundary line on the image data, and estimates the actual orientation and the actual position of the vehicle on the basis of the calculated relative orientation, the calculated relative position, and the boundary line data.

4. The vehicle position estimation device according to claim 3, wherein
of the boundary line on the image data, the position estimation unit detects, as the road surface marking data, the position of the end portion that is located on an opening portion side of the parking space that is delineated by the boundary line in such a manner as to have an opening portion, and a direction of extension of the boundary line including the end portion.

5. The vehicle position estimation device according to claim 3, wherein
of the boundary line on the image data, the position estimation unit detects, as the road surface marking data, a position of a central point of the end portion and a direction of extension of the boundary line including the end portion.

6. The vehicle position estimation device according to claim 1, wherein
the parking lot data acquisition unit acquires, as the parking lot data, first marker data capable of identifying the absolute orientation and the absolute position of a first marker, the first marker including a first line segment and being the road surface marking that is pre-provided around a route along which the vehicle travels in the parking lot, and
the position estimation unit calculates the relative orientation and the relative position of the first marker with respect to the vehicle by detecting, as the road surface marking data, a position of the first marker and an orientation of the first line segment included in the first marker on the image data, and estimates the actual orientation and the actual position of the vehicle on the basis of the calculated relative orientation, the calculated relative position, and the first marker data.

7. The vehicle position estimation device according to claim 1, wherein
the parking lot data acquisition unit acquires, as the parking lot data, at least one of boundary line data and second marker data, the boundary line data being capable of identifying the absolute orientation and the absolute position of a boundary line that is the road surface marking indicative of a boundary of a parking space pre-provided in the parking lot, the second marker data being capable of identifying the absolute orientation and the absolute position of a second marker, the second marker including a second line segment and being the road surface marking that is provided in an area around the boundary line and on an inside of a route along which the vehicle makes a turn in the parking lot, and
when the vehicle makes the turn, the position estimation unit calculates the relative orientation and the relative position of at least one of the boundary line and the second marker that are located on an inside of the turn of the vehicle by detecting, as the road surface marking data, data related to the at least one of the boundary line and the second marker from inside image data that is the image data representative of the situation on the inside of the turn of the vehicle, and estimates the actual orientation and the actual position of the vehicle on the basis of the calculated relative orientation, the calculated relative position, and the at least one of the boundary line data and the second marker data corresponding to the detected road surface marking data.

8. The vehicle position estimation device according to claim 1, wherein
the position estimation unit detects, as the road surface marking data, a first value indicative of an orientation and a position of the road surface marking in a first coordinate system on the image data, converts the first value into a second value in a second coordinate system that is associated with the on-board camera, and converts the second value into a third value in a third coordinate system that is associated with the vehicle so as to calculate the third value as the relative orientation and the relative position of the road surface marking with respect to the vehicle.

9. The vehicle position estimation device according to claim 1, wherein
the position estimation unit calculates a theoretical absolute orientation and a theoretical absolute position of the road surface marking on the basis of estimation values of the actual orientation and the actual position of the vehicle and on the basis of the relative orientation and the relative position of the road surface marking, the estimation values being based on previous estimation results of the actual orientation and the actual position of the vehicle and based on amounts of change in the actual orientation and the actual position of the vehicle that are based on odometry, and
the position estimation unit extracts, from the parking lot data, partial data corresponding to an area around the theoretical absolute position, corrects the estimation values of the actual orientation and the actual position of the vehicle on the basis of differences of the theoretical absolute orientation and the theoretical absolute position from the absolute orientation and the absolute position that are based on the partial data, and estimates the actual orientation and the actual position of the vehicle on the basis of the corrected values.

10. The vehicle position estimation device according to claim 9, wherein
after correcting the estimation value of the actual orientation such that the theoretical absolute orientation coincides with the absolute orientation that is based on the partial data, the position estimation unit corrects the estimation value of the actual position such that the theoretical absolute position coincides with the absolute position that is based on the partial data.

11. A vehicle position estimation device comprising:
a parking lot data acquisition unit that acquires parking lot data including information on an absolute position of each of a plurality of road surface markings that are provided on a road surface of a parking lot;
an image data acquisition unit that acquires image data on an image captured by an on-board camera that captures a situation around a vehicle; and
a position estimation unit that calculates relative positions of at least two of the plurality of road surface markings with respect to the vehicle on the image data by detecting road surface marking data related to the at least two of the plurality of road surface markings from the image data, and that estimates an actual position of the vehicle on the basis of the calculated relative positions and the parking lot data.

12. The vehicle position estimation device according to claim 11, wherein
the plurality of road surface markings include at least one first road surface marking that is located on a left side of the vehicle and at least one second road surface marking that is located on a right side of the vehicle, and
the position estimation unit calculates the relative positions of the first road surface marking and the second road surface marking by detecting, as the road surface marking data, a first position of the first road surface marking from left side image data that is the image data representative of the situation on the left side of the vehicle and by detecting, as the road surface marking data, a second position of the second road surface marking from right side image data that is the image data representative of the situation on the right side of the vehicle.

13. The vehicle position estimation device according to claim 11, wherein
the position estimation unit calculates the relative positions of the at least two road surface markings that are located on either a left side or a right side of the vehicle by detecting, as the road surface marking data, a position of each of the at least two road surface markings from side image data that is the image data representative of the situation on either the left side or the right side of the vehicle.

14. The vehicle position estimation device according to claim 11, wherein
the parking lot data acquisition unit acquires, as the parking lot data, boundary line data capable of identifying the absolute positions of end portions of a plurality of boundary lines that are the road surface markings indicative of a boundary of a parking space pre-provided in the parking lot, and
the position estimation unit calculates the relative positions of at least two of the plurality of boundary lines by detecting, as the road surface marking data, positions of the end portions of the at least two boundary lines on the image data, and estimates the actual position of the vehicle on the basis of the calculated relative positions and the boundary line data.

15. The vehicle position estimation device according to claim 14, wherein
of the at least two boundary lines on the image data, the position estimation unit detects, as the road surface marking data, the positions of the end portions that are located on an opening portion side of the parking space that is delineated by the boundary lines in such a manner as to have an opening portion.

16. The vehicle position estimation device according to claim 14, wherein
the position estimation unit detects, as the road surface marking data, positions of central points of the end portions of the at least two boundary lines on the image data.

17. The vehicle position estimation device according to claim 11, wherein
the parking lot data acquisition unit acquires, as the parking lot data, boundary line data and marker data, the boundary line data being capable of identifying the absolute positions of end portions of a plurality of boundary lines that are the road surface markings indicative of a boundary of a parking space that is pre-provided in the parking lot, the marker data being capable of identifying the absolute positions of a plurality of markers that are pre-provided around a route along which the vehicle travels in the parking lot, and
the position estimation unit estimates the actual position of the vehicle by detecting the road surface marking data that is related to at least two of the plurality of boundary lines, at least two of the plurality of markers, or both at least one of the plurality of boundary lines and at least one of the plurality of markers.

18. The vehicle position estimation device according to claim 11, wherein
the position estimation unit detects, as the road surface marking data, first values indicative of positions of the at least two road surface markings in a first coordinate system on the image data, converts the first values into second values in a second coordinate system that is associated with the on-board camera, and converts the second values into third values in a third coordinate system that is associated with the vehicle so as to calculate the third values as the relative positions of the at least two road surface markings with respect to the vehicle.

19. The vehicle position estimation device according to claim 11, wherein
the position estimation unit calculates theoretical absolute positions of the at least two road surface markings on the basis of an estimation value of the actual position of the vehicle and on the basis of the relative positions of the at least two road surface markings, the estimation value being based on a previous estimation result of the actual position of the vehicle and based on an amount of change in the actual position of the vehicle that is based on odometry, and
the position estimation unit extracts, from the parking lot data, partial data corresponding to an area around the theoretical absolute positions, corrects the estimation value of the actual position of the vehicle on the basis of differences of the theoretical absolute positions from the absolute positions, and estimates the actual position of the vehicle on the basis of the corrected value.

20. A vehicle control device configured to be mounted on a vehicle, the vehicle control device comprising:
a travel control unit that controls a traveling state of the vehicle to achieve autonomous travel in a parking lot;
a parking lot data acquisition unit that acquires parking lot data capable of identifying an absolute orientation and an absolute position of a road surface marking that is provided on a road surface of the parking lot;
an image data acquisition unit that acquires image data obtained by an on-board camera that captures a situation around a vehicle; and
a position estimation unit that calculates a relative orientation and a relative position of the road surface marking with respect to the vehicle on the image data during the autonomous travel by detecting road surface marking data related to the road surface marking from the image data, and that estimates an actual orientation and an actual position of the vehicle on the basis of the calculated relative orientation, the calculated relative position, and the parking lot data.

21. A vehicle control device configured to be mounted on a vehicle, the vehicle control device comprising:
a travel control unit that controls a traveling state of the vehicle to achieve autonomous travel in a parking lot;
a parking lot data acquisition unit that acquires parking lot data including information on an absolute position of each of a plurality of road surface markings that are provided on a road surface of the parking lot;
an image data acquisition unit that acquires image data on an image captured by an on-board camera that captures a situation around a vehicle; and
a position estimation unit that calculates relative positions of at least two of the plurality of road surface markings with respect to the vehicle on the image data during the autonomous travel by detecting road surface marking data related to the at least two of the plurality of road surface markings from the image data, and that estimates an actual position of the vehicle on the basis of the calculated relative positions and the parking lot data.
